(19) Europäisches Patentamt
European Patent Office
Office européen des brevets

(11) **EP 3 333 235 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **17182443.6**

(22) Anmeldetag: **20.07.2017**

(51) Internationale Patentklassifikation (IPC):
*C09J 7/38* (2018.01)    *C09J 7/25* (2018.01)
*B29B 7/44* (2006.01)    *B29B 7/48* (2006.01)
*B29B 7/52* (2006.01)    *B29B 7/74* (2006.01)
*B29B 7/82* (2006.01)    *B29B 7/90* (2006.01)

(52) Gemeinsame Patentklassifikation (CPC):
**C09J 7/255; B29B 7/485; B29B 7/487; B29B 7/526; B29B 7/748; B29B 7/826; B29B 7/90; C09J 7/22; C09J 7/38; C09J 7/387;** B29B 7/426; B29B 7/823; B29B 7/845; C08K 9/10; C09J 153/02;

(Forts.)

(54) **HAFTKLEBESTREIFEN**

ADHESIVE STRIPS

BANDE ADHÉSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2016 DE 102016224578**

(43) Veröffentlichungstag der Anmeldung:
**13.06.2018 Patentblatt 2018/24**

(73) Patentinhaber: **tesa SE**
**22848 Norderstedt (DE)**

(72) Erfinder:
• **BURMEISTER, Anna**
**22527 Hamburg (DE)**
• **BURMEISTER, Axel**
**22527 Hamburg (DE)**
• **RADEMACHER, Franciska**
**22525 Hamburg (DE)**
• **PETERSEN, Anika**
**24598 Heidmühlen (DE)**

(74) Vertreter: **tesa SE**
**Hugo-Kirchberg-Straße 1**
**22848 Norderstedt (DE)**

(56) Entgegenhaltungen:
EP-A1- 3 075 772       EP-A1- 3 333 236
WO-A1-2017/207119     DE-A1-102015 206 076

(52) Gemeinsame Patentklassifikation (CPC): (Forts.)
C09J 2203/33; C09J 2301/124; C09J 2301/302;
C09J 2301/408; C09J 2301/412; C09J 2400/24;
C09J 2467/006

**Beschreibung**

Die Erfindung betrifft einen Haftklebestreifen.

Klebebänder werden häufig für die Verklebung von Kleinstbauteilen beispielsweise in Geräten in der Consumer-Elektronik-Industrie verwendet. Um dies zu ermöglichen, ist es erforderlich, dass die Form des Klebebandabschnittes der Form des Bauteils angepasst ist. Hierbei sind oft auch schwierige Geometrien nötig, welche durch Stanzen des Klebebandes erhalten werden. So sind Stegbreiten bei Stanzteilen von wenigen Millimetern oder sogar weniger keine Seltenheit. Bei der Applikation dieser empfindlichen Klebebänder auf die Bauteile kommt es häufig zur Verformung der Stanzteile.

Um die Verformung zu unterdrücken oder zumindest zu reduzieren, hat es sich als vorteilhaft herausgestellt, in die Klebebänder als mittlere Lage eine Folie, zum Beispiel eine PET-Folie, zu integrieren, um die Zugkräfte bei der Applikation aufzufangen.

Verklebungen mit solchen Klebebändern werden zunehmend auch verwendet, wenn das Bauteil Schockbelastungen ausgesetzt ist. Als besonders schockbeständig haben sich Verklebungen mit Haftklebestreifen herausgestellt, welche einen viskoelastischen, syntaktisch geschäumten Kern, eine stabilisierende Folie und auf den Außenlagen zwei selbstklebende Klebeschichten aufweisen.

Diese Haftklebestreifen sind derart leistungsfähig, dass unter Schockbelastung ein kohäsiver Bruch innerhalb des Haftklebestreifens zu beobachten ist. Die Verbindung zwischen dem geschäumten Kern und der stabilisierenden Folie versagt, und Schaum und Folie lösen sich voneinander.

Geschäumte Haftklebemassensysteme sind seit längerem bekannt und im Stand der Technik beschrieben.

Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und - instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und -wiedergabegeräte, wie beispielsweise Rundfunkgeräte und dergleichen

- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht heute zunehmend durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkerer Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund der unerwartet guten, nämlich nochmals verbesserten, Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für zum Beispiel CD, DVD, Bluray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die eine hohe Halteleistung besitzen.

Des Weiteren ist wichtig, dass die Klebebänder in ihrer Halteleistung nicht versagen, wenn das elektronische Gerät, zum Beispiel ein Handy, fallengelassen wird und auf den Untergrund aufprallt. Der Klebestreifen muss also eine sehr hohe Schockresistenz aufweisen.

Die EP 2 832 780 A1 betrifft einen druckempfindlichen Klebeschaum, der ein Gummielastomer, mindestens einen Kohlenwasserstoff-Klebrigmacher und einen Vernetzer ausgewählt aus der Gruppe der multifunktionellen (Meth)Acrylatverbindungen enthält.

Die JP 2010/070,655 A betrifft eine Zusammensetzung, die ein Styrol-basiertes thermoplastisches Elastomer (A), einen Klebrigmacher (B) und wärmeexpandierbares mikrokapselartiges Schäumungsagenz enthält.

Die DE 10 2008 056 980 A1 betrifft eine Selbstklebemasse bestehend aus einem Gemisch enthaltend:

- einen Polymerblend aus thermoplastischen und/oder nicht-thermoplastischen Elastomeren mit mindestens einem Vinylaromatenblockcopolymer, das einen Anteil größer 30 Gew.-% an 1,2-verknüpftem Dien im Elastomerblock enthält,
- mindestens ein Klebharz
- expandierte polymere Mikrokugeln.

Die WO 2009/090119 A1 betrifft eine druckempfindliche Klebemasse, die expandierte Mikroballons enthält, wobei die Klebkraft der die expandierten Mikroballons enthaltenden Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30 % reduziert ist.

Die WO 2003/011954 A1 betrifft einen geschäumten Haftklebstoffgegenstand, wobei der Gegenstand a) ein Polymergemisch, enthaltend mindestens ein styrolisches Blockcopolymer und mindestens ein Polyarylenoxid, und b) ein oder mehrere schaumfähige Polymermikrokügelchen umfasst.

Die DE 10 2015 206 076 A1 betrifft einen Haftklebstreifen, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist, und gegebenenfalls aus einer oder mehreren Zwischenträgerschichten, dadurch gekennzeichnet, dass der Haftklebestreifen ausschließlich aus den genannten Klebemassenschichten und gegebenenfalls vorhandenen Zwischenträgerschichten besteht und die eine äußere obere und eine äußere untere Fläche des Haftklebestreifens von der oder den genannten Klebemassenschichten gebildet werden. Der wiederablösbare Haftklebestreifen zeichnet sich durch seine ausgeprägte Schockresistenz aus.

Die noch unveröffentlichte Patentanmeldung DE 10 2016 202 479 desselben Anmelders wie dieser Schrift beschreibt ein vierschichtiges Klebeband, bei dem eine geschäumte innenliegende Schicht zusätzlich durch eine PET-Stabilisierungsfolie verstärkt wird. Durch einen solchen Aufbau konnten besonders schockresistente Klebebänder angeboten werden.

Die ebenfalls noch unveröffentlichte Patentanmeldung DE 10 2016 209 707 desselben Anmelders wie dieser Schrift beschreibt einen Haftklebestreifen aus drei Schichten, umfassend eine innenliegende Schicht F aus einem nichtdehnbaren Folienträger, eine Schicht SK1 aus einer selbstklebenden Masse, die auf einer der Oberflächen der Folienträgerschicht F angeordnet ist und die auf einer geschäumten Acrylatmasse basiert, und eine Schicht SK2 aus einer selbstklebenden Masse, die auf der der Schicht SK1 gegenüberliegenden Oberfläche der Folienträgerschicht F angeordnet ist und die auf einer geschäumten Acrylatmasse basiert. Durch einen solchen Aufbau konnten ebenfalls besonders schockresistente Klebebänder angeboten werden.

Die EP 3 075 772 A1 offenbart einen Haftklebstreifen, der sich durch dehnendes Verstrecken im Wesentlichen in der Verklebungsebene rückstands- und zerstörungsfrei wieder ablösen lässt, umfassend eine Trägerschicht, auf der beidseitig Klebmassenschichten aufgebracht sind, wobei die Klebemassenschichten jeweils aus einer Haftklebemasse bestehen, die auf Basis von Vinylaromatenblockcopolymeren und Klebharzen aufgebaut ist.

Aufgabe der Erfindung gegenüber dem vorveröffentlichten Stand der Technik ist es, einen Haftklebestreifen zu finden, der eine verbesserte Schockresistenz in der x,y-Ebene und/oder in der z-Ebene (d.h. bezüglich mechanischer Einwirkung senkrecht auf die Verklebungsebene) aufweist, und der insbesondere eine verbesserte Schockresistenz sowohl in der x,y-Ebene, als auch in der z-Ebene aufweist.

Die Aufgabe wird überraschenderweise mit einem gattungsgemäßen Haftklebestreifen erfindungsgemäß gelöst, wie er im Hauptanspruch niedergelegt ist. Gegenstand der Unteransprüche sind dabei vorteilhafte Ausführungsformen des Haftklebstreifens.

Demgemäß betrifft die Erfindung einen Haftklebestreifen aus zumindest drei Schichten, insbesondere genau drei Schichten, umfassend

- eine innenliegende Schicht F aus einem nichtdehnbaren Folienträger, wobei die Folienträgerschicht F sowohl in der Längsrichtung als auch in der Querrichtung eine Reißdehnung von weniger als 300 %, wie gemäß Messmethode R1 bestimmt, aufweist,
- eine Schicht SK1 aus einer selbstklebenden Masse, die auf einer der Oberflächen der Folienträgerschicht F angeordnet ist und die auf einer mit Mikroballons geschäumten Vinylaromatenblockcopolymer-Masse basiert,
- eine Schicht SK2 aus einer selbstklebenden Masse, die auf der der Schicht SK1 gegenüberliegenden Oberfläche

5

der Folienträgerschicht F angeordnet ist und die auf einer mit Mikroballons geschäumten Vinylaromatenblockcopolymer-Masse basiert,

wobei der mittlere Durchmesser der von den Mikroballons gebildeten Hohlräume in den Selbstklebemasseschichten SK1 und SK2 jeweils unabhängig voneinander 20 bis 40 $\mu$m beträgt, wie gemäß Messmethode Durchmesser bestimmt.

Der Haftklebestreifen ist dadurch gekennzeichnet, dass die Folienträgerschicht F eine Zugfestigkeit in Längsrichtung von größer 100 N/mm$^2$ und/oder eine Zugfestigkeit in Querrichtung von größer 100 N/mm$^2$ aufweist, wie jeweils gemäß Messmethode R1 bestimmt.

Weiterhin besteht die Selbstklebemasseschicht SK1 und/oder SK2 aus folgender Zusammensetzung:

- Vinylaromatenblockcopolymere 20 bis 75 Gew.-% 25
- Klebharze 24,6 bis 60 Gew.-%
- Mikroballons 0,2 bis 10 Gew.-%
- Additive 0,2 bis 10 Gew.-%

Die erfindungsgemäßen Haftklebestreifen verfügen über eine hohe Schockresistenz. So sind sie durch eine hohe Schlagzähigkeit in z-Richtung, aber auch in der x,y-Ebene (d.h. Querschlagzähigkeit) gekennzeichnet. Außerdem weisen sie im Kugelfalltest (Schlagzähigkeit, Ball drop) sehr gute Werte auf. Ferner bestechen sie durch eine hohe Push-out-Festigkeit (in der z-Ebene). Sie können daher insbesondere zur Verklebung von Bauteilen wie z.B. Akkus und elektronischen Geräten wie z.B. Handys verwendet werden.

Es wurde überraschenderweise gefunden, dass sich in Selbstklebemasseschichten auf Basis von mit Mikroballons geschäumten Vinylaromatenblockcopolymer-Massen verbesserte Schockresistenzen erzielen lassen, indem die mittleren Durchmesser der von den Mikroballons gebildeten Hohlräume in den Selbstklebemasseschichten zu 20 bis 40 $\mu$m ausgewählt werden. Verbesserte Schockresistenzen weisen dementsprechend auch die erfindungsgemäßen Haftklebestreifen auf, die solche Selbstklebemasseschichten umfassen.

Die äußeren der Verklebung zugänglichen Flächen des Haftklebstreifens werden von den erfindungsgemäßen geschäumten Vinylaromatenblockcopolymermassen gebildet. Dies bedeutet, dass die eine äußere obere und die eine äußere untere Fläche des Haftklebestreifens von den Selbstklebemasseschichten SK1 und SK2 gebildet werden. Dadurch werden die erfindungsgemäß festgestellten Vorteile wie die hohe Schockresistenz in der x,y-Ebene sowie insbesondere in der z-Ebene verwirklicht. Von zentraler Bedeutung für die Schockresistenz sind dabei insbesondere die in den Selbstklebemasseschichten SK1 und SK2 von den Mikroballons gebildeten Hohlräume des genannten Durchmessers.

Die innenliegende Schicht F aus einem nichtdehnbaren Folienträger wird im Rahmen dieser Schrift synonym auch einfach als Folienträger, Folienschicht oder als Folienträgerschicht bezeichnet.

Die Schichten SK1 und SK2 aus selbstklebender Masse werden im Rahmen dieser Schrift auch als Selbstklebemasseschichten SK1 und SK2, einfach als Schichten SK1 und SK2 oder auch als außenliegende Schichten, Klebemassen-, Selbstklebemassen- oder Haftklebemasseschichten SK1 und SK2 bezeichnet. Der Begriff "außenliegend" bezieht sich dabei auf den vorzugsweise dreischichtigen Aufbau des Haftklebestreifens aus dem Folienträger und den Schichten SK1 und SK2, unbeschadet eventuell vorgesehener Liner auf den Außenflächen der Selbstklebemasseschichten (siehe weiter unten).

Im erfindungsgemäßen Haftklebestreifen sind die Schichten SK1 und SK2 aus einer selbstklebenden Masse auf einer der Oberflächen der Folienträgerschicht F angeordnet bzw. auf der der Schicht SK1 gegenüberliegenden Oberfläche der Folienträgerschicht F angeordnet. Unter dem Begriff "Anordnung" der Schichten SK1 bzw. SK2 auf den Oberflächen der Folienträgerschicht kann in der vorliegenden Anmeldung eine solche Anordnung gemeint sein, bei der die Schichten SK1 und/oder SK2, vorzugsweise beide Schichten SK1 und SK2, in direktem Kontakt mit den Oberflächen der Folienträgerschicht stehen, d.h. direkt auf der Oberfläche angeordnet sind. Alternativ kann damit auch eine solche Anordnung gemeint sein, bei der zwischen der Schicht SK1 und der einen Oberfläche der Flächenträgerschicht F und/oder zwischen der Schicht SK2 und der der Schicht SK1 gegenüberliegenden Oberfläche der Folienträgerschicht F mindestens eine weitere Schicht vorliegt. Vorzugsweise stehen im erfindungsgemäßen Haftklebestreifen beide Schichten SK1 und SK2 in direktem Kontakt mit einer der Oberflächen der Folienträgerschicht F bzw. mit der der Schicht SK1 gegenüberliegenden Oberfläche der Folienträgerschicht F

In einer besonders bevorzugten Ausführungsvariante der Erfindung handelt es sich um einen in Bezug auf die Zusammensetzung der Schichten symmetrisch aufgebauten Haftklebestreifen, indem die geschäumten selbstklebenden Vinylaromatenblockcopolymer-Massen der beiden außenliegenden Schichten SK1 und SK2 chemisch identisch sind und vorteilhaft auch, sofern ihnen Additive zugesetzt sind, diese identisch sind und in identischer Menge eingesetzt sind.

Erfindungsgemäß ist auch ein Haftklebestreifen realisierbar, der in z-Richtung strukturell symmetrisch aufgebaut ist, indem die außenliegenden Selbstklebemasseschichten SK1 und SK2 zwar gleich dick sind und/oder dieselbe Dichte aufweisen, aber - als jeweils geschäumte selbstklebende Vinylaromatenblockcopolymermassenschichten - chemisch unterschiedlich sind.

In sehr vorteilhafter Vorgehensweise ist der Haftklebestreifen vollkommen symmetrisch aufgebaut, das heißt sowohl bezüglich der chemischen Zusammensetzung der beiden geschäumten selbstklebenden Vinylaromatenblockcopolymermassenschichten SK1 und SK2 (einschließlich deren gegebenenfalls vorliegenden Additivierungen), als auch bezüglich seines strukturellen Aufbaus, indem beide Oberflächen des nichtdehnbaren Folienträgers F identisch vorbehandelt sind und die beiden außenliegenden Selbstklebemasseschichten SK1 und SK2 dieselbe Dicke und Dichte aufweisen. "Vollkommen symmetrisch" bezieht sich dabei insbesondere auf die z-Richtung ("Dicke", Richtung senkrecht auf die Haftklebstreifenebene) des Haftklebestreifens, kann sich aber darüber hinaus natürlich auch auf die Geometrie in der Flächenebene (x- und y-Richtungen, also Länge und Breite, des Haftklebestreifens) beziehen.

Die nachfolgenden Ausführungen beziehen sich explizit ausnahmslos auch auf die vollkommen symmetrische Ausführungsvariante der Erfindung.

Die selbstklebenden Vinylaromatenblockcopolymermassen der Schichten SK1 und SK2 sind jeweils eine Haftklebemasse (PSA; englisch: "pressure sensitive adhesives"). Die Begriffe "selbstklebend" und "haftklebend" werden im Rahmen dieser Schrift insofern synonym verwendet.

Haftklebemassen sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweist.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Wenn in den nachfolgenden Ausführungen zu bevorzugten Ausführungsformen der Erfindung von einer "Selbstklebemasseschicht" bzw. "Selbstklebemasseschichten" oder einer "Vinylaromatenblockcopolymer-Masse" bzw. "Vinylaromatenblockcopolymer-Massen" gesprochen wird, so kann sich dies auf die Schicht SK1, auf die Schicht SK2 oder aber auf beide Schichten beziehen.

## Erfindungsgemäß einsetzbare Selbstklebemasseschichten

Die Schichten SK1 und SK2 basieren jeweils auf einer mit Mikroballons geschäumten Vinylaromatenblockcopolymer-Masse.

Vorzugsweise wird als Vinylaromatenblockcopolymer mindestens ein Synthesekautschuk in Form eines Blockcopolymers mit einem Aufbau A-B, A-B-A, (A-B)$_n$, (A-B)$_n$X oder (A-B-A)$_n$X eingesetzt, worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und

- n für eine ganze Zahl $\geq 2$ stehen.

Besonders bevorzugt sind alle Synthesekautschuke der erfindungsgemäßen Selbstklebemasseschicht Blockcopolymere mit einem Aufbau A-B, A-B-A, $(A-B)_n$, $(A-B)_nX$ oder $(A-B-A)_nX$ wie vorstehend dargelegt. Die erfindungsgemäße Selbstklebemasseschicht kann somit auch Gemische verschiedener Blockcopolymere mit einem Aufbau wie vorstehend beschrieben enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Selbstklebemasseschicht ein Blockcopolymer mit einem Aufbau A-B, A-B-A, $(A-B)_2X$, $(A-B)_3X$ oder $(A-B)_4X$, wobei für A, B und X die vorstehenden Bedeutungen gelten. Ganz besonders bevorzugt sind alle Synthesekautschuke der erfindungsgemäßen Selbstklebemasseschicht Blockcopolymere mit einem Aufbau A-B, A-B-A, $(A-B)_2X$, $(A-B)_3X$ oder $(A-B)_4X$, wobei für A, B und X die vorstehenden Bedeutungen gelten. Insbesondere ist der Synthesekautschuk der erfindungsgemäßen Selbstklebemassenschicht ein Gemisch aus Blockcopolymeren mit einem Aufbau A-B, A-B-A, $(A-B)_2X$, $(A-B)_3X$ oder $(A-B)_4X$, das bevorzugt mindestens Triblockcopolymere A-B-A und/oder $(A-B)_2X$ enthält und zumindest ein Diblockcopolymer A-B.

Weiterhin vorteilhaft ist ein Gemisch aus Diblock- und Triblockcopolymeren und $(A-B)_n$- oder $(A-B)_nX$-Block-copolymeren mit n größer gleich 3.

Weiterhin vorteilhaft ist ein Gemisch aus Diblock- und Multiblockcopolymeren und $(A-B)_n$- oder $(A-B)_nX$-Block-copolymeren mit n größer gleich 3.

Als Vinylaromatenblockcopolymere können somit beispielsweise Diblockcopolymere A-B in Kombination mit anderen der genannten Blockcopolymere genutzt werden. Über den Anteil an Diblockcopolymeren können das Auffließverhalten der Selbstklebemassen und deren Verklebungsfestigkeit eingestellt werden. Erfindungsgemäß eingesetztes Vinylaromatenblockcopolymer weist vorzugsweise einen Diblockcopolymeranteil von 0 Gew.-% bis 70 Gew.-% und bevorzugter von 15 Gew.-% bis 50 Gew.-% auf. Ein höherer Anteil an Diblockcopolymer im Vinylaromatenblockcopolymer führt zu einer deutlichen Reduktion an Kohäsion der Klebemasse.

Als Selbstklebemassen finden bevorzugt solche auf Basis von Blockcopolymeren enthaltend Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem, Anwendung.

Besonders bevorzugt basieren erfindungsgemäße Selbstklebemassen auf Styrolblockcopolymeren, beispielsweise besitzen die Blockcopolymere der Selbstklebemassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können AB-Zweiblockcopolymere vorhanden sein. Sämtliche der vorgenannten Polymere können allein oder im Gemisch miteinander genutzt werden.

In einem erfindungsgemäß eingesetzten Vinylaromatenblockcopolymer, wie insbesondere einem Styrolblockcopolymer, beträgt der Anteil an Polyvinylaromaten, wie insbesondere Polystyrol, vorzugsweise mindestens 12 Gew.-%, bevorzugter mindestens 18 Gew.-% und besonders bevorzugt mindestens 25 Gew.-% und ebenso vorzugsweise höchstens 45 Gew.-% und bevorzugter höchstens 35 Gew. -%.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vorzugsweise umfassen dabei die Vinylaromaten zum Aufbau des Blocks A Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teilhydriertes Derivat eines dieser beiden Polymere wie insbesondere Polybutylenbutadien, oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C, insbesondere mindestens 50 °C und für B-Blöcke höchstens 25 °C, insbesondere höchstens -25 °C) wider.

Der Anteil der Vinylaromatenblockcopolymere, wie insbesondere Styrolblockcopolymere, beträgt in Summe bezogen auf die gesamte Selbstklebemasseschicht mindestens 20 Gew.-%, vorzugsweise mindestens 30 Gew.-%, weiter bevorzugt mindestens 35 Gew.-%. Ein zu geringer Anteil an Vinylaromatenblockcopolymeren hat zur Folge, dass die Kohäsion der Haftklebemasse relativ niedrig ist.

Der maximale Anteil der Vinylaromatenblockcopolymere, wie insbesondere Styrolblockcopolymere, in Summe bezogen auf die gesamte Selbstklebemasse beträgt maximal 75 Gew.-%, bevorzugt maximal 65 Gew.-%, ganz besonders bevorzugt maximal 55 Gew.-%. Ein zu hoher Anteil an Vinylaromatenblockcopolymeren hat wiederum zur Folge, dass die Haftklebemasse kaum noch haftklebrig ist.

Dementsprechend beträgt der Anteil der Vinylaromatenblockcopolymere, wie insbesondere Styrolblockcopolymere, in Summe bezogen auf die gesamte Selbstklebemasse mindestens 20 Gew.-%, bevorzugter mindestens 30 Gew.-%, weiter bevorzugt mindestens 35 Gew.-% und gleichzeitig maximal 75 Gew.-%, bevorzugter maximal 65 Gew.-%, ganz besonders bevorzugt maximal 55 Gew.-%.

Die Haftklebrigkeit der Selbstklebemassen kann durch Zugabe von mit der Elastomerphase mischbaren Klebharzen erreicht werden. Die Selbstklebemassen weisen in der Regel neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinem Fachmannverständnis ein oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebemasse erhöht.

Falls in den Selbstklebemassen Klebharz enthalten ist, wird entsprechend zu mindestens 75 Gew.-% (bezogen auf den Gesamtharzanteil) ein Harz gewählt mit einem DACP (diacetone alcohol cloud point) von größer 0 °C, bevorzugt größer 10 °C, und einer Erweichungstemperatur (Ring & Ball) von größer gleich 70 °C, vorzugsweise größer gleich 100 °C. Besonders bevorzugt weist das genannte Klebharz gleichzeitig einen DACP-Wert von maximal 45 °C auf, sofern keine Isoprenblöcke in der Elastomerphase vorliegen, oder von maximal 60 °C auf, sofern Isoprenblöcke in der Elastomephase vorliegen. Besonders bevorzugt beträgt die Erweichungstemperatur des genannten Klebharzes maximal 150 °C.

Besonders bevorzugt handelt es sich bei den Klebharzen zu mindestens 75 Gew.-% (bezogen auf den Gesamtharzanteil) um Kohlenwasserstoffharze oder Terpenharze oder eine Mischung dergleichen.

Es wurde gefunden, dass als Klebrigmacher für die Haftklebemasse(n) insbesondere unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von Cs-, $C_5$/$C_9$- oder Cs-Monomerströmen, Polyterpenharze auf Basis von α-Pinen und/oder β-Pinen und/oder δ-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Klebharze, hydriert oder nicht hydriert, die auch Sauerstoff enthalten, können optional bevorzugt bis zu einem maximalen Anteil von 25 % bezogen auf die Gesamtmasse der Harze in der Klebemasse eingesetzt werden, so zum Beispiel Kolophonium- und/oder Kolophoniumesterharze und/oder Terpenphenolharze. Der Anteil der bei Raumtemperatur optional einsetzbaren flüssigen Harze bzw. Weichmacher beträgt gemäß einer bevorzugten Variante bis zu 15 Gew.-%, vorzugsweise bis zu 10 Gew.-% bezogen auf die gesamte Selbstklebemasse.

In einer bevorzugten Ausführungsform sind in den Selbstklebemasseschichten 30 bis 50 Gew.-% mindestens eines Klebharzes, bezogen auf das Gesamtgewicht der Selbstklebemasseschicht, enthalten.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene,
  vorzugsweise mit einem Anteil von 0,2 bis 5 Gew.-% bezogen auf das Gesamtgewicht der Selbstklebemasse
- primäre Antioxidantien wie zum Beispiel sterisch gehinderte Phenole,
  vorzugsweise mit einem Anteil von 0,2 bis 1 Gew.-% bezogen auf das Gesamtgewicht der Selbstklebemasse
- sekundäre Antioxidantien, wie zum Beispiel Phosphite, Thioester oder Thioether, vorzugsweise mit einem Anteil von 0,2 bis 1 Gew.-% bezogen auf das Gesamtgewicht der Selbstklebemasse
- Prozessstabilisatoren wie zum Beispiel C-Radikalfänger,
  vorzugsweise mit einem Anteil von 0,2 bis 1Gew.-% bezogen auf das Gesamtgewicht der Selbstklebemasse
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Selbstklebemasse
- Verarbeitungshilfsmittel,
  vorzugsweise mit einem Anteil von 0,2 bis 1 Gew.-% bezogen auf das Gesamtgewicht der Selbstklebemasse
- Endblockverstärkerharze,

vorzugsweise mit einem Anteil von 0,2 bis 10 Gew.-% bezogen auf das Gesamtgewicht der Selbstklebemasse sowie

- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine,

vorzugsweise mit einem Anteil von 0,2 bis 10 Gew.-% bezogen auf das Gesamtgewicht der Selbstklebemasse.

Die Art und Menge der Abmischkomponenten kann bedarfsweise ausgewählt werden.

Erfindungsgemäß ist es auch, wenn die Klebemasse einige, vorzugsweise alle der genannten Zuschlagstoffe jeweils nicht aufweist.

In einer Ausführungsform der vorliegenden Erfindung enthält die Selbstklebemasse auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können weiß, schwarz oder farbig sein.

Als Weichmacher können zum Beispiel Mineralöle, (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Selbstklebemasse einzustellen.

Gemäß einer bevorzugten Ausführungsform der Erfindung besteht die Klebemasse nur aus Vinylaromatenblockcopolymeren, Klebharzen, Mikroballons und gegebenenfalls den oben erwähnten Additiven.

Die Klebemasse besteht aus folgender Zusammensetzung:

| | |
|---|---|
| • Vinylaromatenblockcopolymere | 20 bis 75 Gew.-% |
| • Klebharze | 24,6 bis 60 Gew.-% |
| • Mikroballons | 0,2 bis 10 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 35 bis 65 Gew.-% |
| • Klebharze | 34,6 bis 45 Gew.-% |
| • Mikroballons | 0,2 bis 10 Gew.-% |
| • Additive | 0,2 bis 10 Gew.-% |

Die erfindungsgemäßen Selbstklebemassen sind geschäumt. Bevorzugt erfolgt die Schäumung durch das Einbringen und nachfolgende Expandieren von (unexpandierten) Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an unexpandierten Mikroballontypen kommerziell erhältlich, welche sich im Wesentlichen über ihre Größe und ihre zur Expansion benötigten Starttemperaturen (75 bis 220 °C) differenzieren. Ein Beispiel für kommerziell erhältliche unexpandierte Mikroballons sind die Expancel® DU-Typen (DU = dry unexpanded) von der Firma Akzo Nobel. In der Typenbezeichnung Expancel xxx DU yy (Dry unexpended) steht dabei "xxx" für die Zusammensetzung der Mikroballonabmischung, und "yy" für die Größe der Mikroballons im expandierten Zustand.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Selbstklebemasse geeignet.

Eine geschäumte erfindungsgemäße Selbstklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Akzo Nobel kommerziell erhältlich. "xxx" steht für die Zusammensetzung der Mikroballonabmischung, "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Schicht SK1 oder der Schicht SK2 oder bevorzugt beider Schichten SK1 und SK2 eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1:6 liegt. Erst nach oder unmittelbar bei der Einarbeitung erfolgt dann die Expansion. Bei lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß beträgt der mittlere Durchmesser der von den Mikroballons gebildeten Hohlräume in den geschäumten Selbstklebemasseschichten SK1 und SK2 unabhängig voneinander 20 bis 40 $\mu$m, vorzugsweise 20 bis 25 $\mu$m. In diesen Bereichen lassen sich besonders gute Schockresistenzen erzielen.

Da hierbei die Durchmesser der von den Mikroballons gebildeten Hohlräume in den geschäumten Selbstklebemasseschichten vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der jeweiligen Selbstklebemasseschicht SK1 oder SK2 gemeint.

Die Bestimmung des mittleren Durchmessers der von den Mikroballons gebildeten Hohlräume in einer Selbstklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Selbstklebemasseschicht liegt zwischen 0,2 Gew.-% und 10 Gew.-%, vorzugsweise zwischen 0,25 Gew.-% und 5 Gew.-%, bevorzugter zwischen 0,5 und 4 Gew.-%, noch bevorzugter zwischen 1 und 3,5 Gew.-%, insbesondere zwischen 1,5 und 2,5 Gew.-%, jeweils bezogen auf die Gesamtzusammensetzung der Selbstklebemasseschicht. In diesen Bereichen lassen sich besonders gute Schockresistenzen erzielen, insbesondere besonders gute Schlagzähigkeiten in z-Richtung und in der x,y-Ebene sowie sehr hohe Ball drop-Werte.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Selbstklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Selbstklebemasseschicht beträgt vorzugsweise 400 bis 990 kg/m$^3$, bevorzugter 450 bis 970 kg/m$^3$, noch bevorzugter 500 bis 900 kg/m$^3$, noch bevorzugter 550 bis 800 kg/m$^3$ und insbesondere 600 bis 750 kg/m$^3$, wie zum Beispiel 600 bis 700 kg/m$^3$. In diesen Bereichen lassen sich besonders gute Schockresistenzen der Selbstklebemasseschichten erzielen, d.h. insbesondere eine hohe Schlagzähigkeit in z-Richtung und in der x,y-Ebene sowie hohe Ball drop-Werte. Entsprechendes gilt für die erfindungsgemäßen Haftklebestreifen, die Selbstklebemasseschichten mit derartigen absoluten Dichten umfassen.

Die relative Dichte beschreibt das Verhältnis der Dichte der geschäumten erfindungsgemäßen Selbstklebemasse zur Dichte der rezepturidentischen, ungeschäumten erfindungsgemäßen Selbstklebemasse. Die relative Dichte einer erfindungsgemäßen Haftklebemasse beträgt vorzugsweise 0,35 bis 0,99, stärker bevorzugt 0,45 bis 0,97, insbesondere 0,50 bis 0,90.

Vorzugsweise weisen die geschäumten Selbstklebemasseschichten SK1 und/oder SK2 eine Dicke zwischen 20 und 200 μm, wie z.B. von 50 μm - 70 μm auf.

**Folienträger**

Die innenliegende Schicht F des erfindungsgemäßen Haftklebestreifens besteht aus einem nichtdehnbaren Folienträger. Unter einem "nichtdehnbaren Folienträger" ist erfindungsgemäß ein Folienträger gemeint, der sowohl in der Längsrichtung als auch in der Querrichtung eine Reißdehnung von weniger als 300 % aufweist. Der Folienträger weist außerdem, bevorzugt unabhängig voneinander sowohl in der Längsrichtung als auch in der Querrichtung, vorzugsweise eine Reißdehnung von weniger als 200 %, bevorzugter von weniger als 150 %, noch bevorzugter von weniger als 100 %, und insbesondere von weniger als 70 %, wie zum Beispiel von weniger als 50%, auf. Die angegebenen Werte beziehen sich jeweils auf die weiter hinten angegebene Messmethode R1. Durch den Einsatz des nichtdehnbaren Folienträgers wird die Verarbeitbarkeit des resultierenden Haftklebestreifens erleichtert, insbesondere lassen sich die Stanzprozesse erleichtern. Ferner führt die Verwendung eines nichtdehnbaren Folienträgers, beispielsweise aus Polyethylenterephthalat (PET), im erfindungsgemäßen Haftklebestreifen gegenüber der Verwendung eines dehnbaren Folienträgers, d.h. eines Folienträgers mit einer Reißdehnung von mindestens 300% (in Bezug auf die weiter hinten angegebene Messmethode R1) sowohl in der Längsrichtung als auch in der Querrichtung, zu einer verbesserten Schockresistenz, insbesondere zu einer verbesserten Schlagzähigkeit in z-Richtung und in der x,y-Ebene sowie zu verbesserten Ball drop-Werten. Die Schockresistenz des erfindungsgemäßen Haftklebestreifens lässt sich nicht lediglich durch die geschäumten Vinylaromatenblockcopolymer-Massen, sondern überraschenderweise auch durch die Art des verwendeten Folienträgers und dessen Dicke beeinflussen.

Als Materialien für die Folie des nichtdehnbaren Folienträgers F werden bevorzugt Polyester, insbesondere Polyethylenterephthalat (PET), Polyamid (PA), Polyimid (PI) oder mono- oder biaxial verstrecktes Polypropylen (PP) verwendet. Ebenfalls möglich ist auch die Verwendung von mehrschichtigen Laminaten oder Coextrudaten, insbesondere aus den vorgenannten Materialien. Vorzugsweise ist der nichtdehnbare Folienträger einschichtig.

In vorteilhafter Vorgehensweise sind eine oder beide Oberflächen der Folienschicht F physikalisch und/oder chemisch vorbehandelt. Eine solche Vorbehandlung kann beispielsweise durch Ätzung und/oder Coronabehandlung und/oder Plasmavorbehandlung und/oder Primerung erfolgen, vorzugsweise durch Ätzung. Sofern beide Oberflächen der Folienschicht vorbehandelt sind, kann die Vorbehandlung jeder Oberfläche unterschiedlich erfolgen oder insbesondere können beide Oberflächen gleich vorbehandelt sein.

Um sehr gute Ergebnisse für die Aufrauhung zu erzielen, ist es zu empfehlen, als Reagenz zum Ätzen der Folie Trichloressigsäure (Cl$_3$C-COOH) oder Trichloressigsäure in Kombination mit inerten pulverförmigen Verbindungen, bevorzugt Siliziumverbindungen, besonders bevorzugt [SiO$_2$]$_x$, einzusetzen. Sinn der inerten Verbindungen ist, in die Oberfläche der Folie, insbesondere der PET-Folie, eingebaut zu werden, um auf diese Weise die Rauigkeit und die Oberflächenenergie zu verstärken.

Die Coronabehandlung ist ein chemisch-thermisches Verfahren zur Steigerung der Oberflächenspannung/Oberflächenenergie von polymeren Substraten. Zwischen zwei Elektroden werden in einer Hochspannungsentladung Elektronen stark beschleunigt, was zu einer Ionisierung der Luft führt. Wird ein Kunststoffsubstrat in die Bahn dieser beschleunigten Elektroden eingebracht, so schlagen die so erzeugten beschleunigten Elektroden mit 2 - 3-facher Energie auf die Substratoberfläche auf, wie sie notwendig wäre, um die molekularen Bindungen der meisten Substrate oberflächlich aufzubrechen. Dies führt zur Entstehung von gasförmigen Reaktionsprodukten und hoch reaktiven, freien Radikalen. Diese freien Radikale können in der Gegenwart von Sauerstoff und den Reaktionsprodukten rasch reagieren und bilden verschiedene chemische Funktionsgruppen auf der Substratoberfläche. Funktionsgruppen, die sich aus diesen Oxidationsreaktionen ergeben, tragen am stärksten dazu bei, die Oberflächenenergie zu steigern. Die Coronabehandlung kann mit Zweielektroden-, aber auch mit Eineelektroden-Anlagen erfolgen. Während der Coronavorbehandlung können (neben üblicher Luft) unterschiedliche Prozessgase wie Stickstoff zum Einsatz kommen, die eine Schutzgasatmosphäre ausbilden beziehungsweise die Coronavorbehandlung unterstützen.

Die Plasma-Behandlung - insbesondere Niederdruck-Plasmabehandlung - ist ein bekanntes Verfahren zur Oberflächen-vorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Als Primer werden allgemein Beschichtungen oder Grundierungen bezeichnet, die insbesondere haftvermittelnde und/oder passivierende und/oder korrosionshemmende Wirkung besitzen. Im Rahmen der vorliegenden Erfindung kommt es insbesondere auf die haftvermittelnde Wirkung an. Haftvermittelnde Primer, oft auch Haftvermittler oder Adhesion Promoter genannt, sind vielfach in Form von kommerziellen Produkten oder aus der technischen Literatur bekannt.

Die Dicke der Folienträgerschicht F liegt gemäß einer bevorzugten Ausführungsform zwischen 5 und 125 $\mu$m, bevorzugter zwischen 10 und 60 $\mu$m, noch bevorzugter zwischen 10 und 50 $\mu$m, noch bevorzugter zwischen 10 und 40 $\mu$m, noch bevorzugter zwischen 23 und 40 $\mu$m und insbesondere zwischen 30 und 40 $\mu$m, beispielsweise beträgt sie 36 $\mu$m. Durch die Dicke der Folie lässt sich überraschenderweise auch die Schockresistenz des Haftklebestreifens beeinflussen.

Vorzugsweise besteht die Folie aus Polyethylenterephthalat und weist eine Dicke zwischen 10 und 50 $\mu$m auf, insbesondere zwischen 30 und 40 $\mu$m wie z.B. 36 $\mu$m. Wird in einem erfindungsgemäßen Haftklebestreifen eine solche Folie eingesetzt, so lassen sich sehr gute Schockresistenzen erzielen. Dies gilt insbesondere dann, wenn die absolute Dichte der Selbstklebemasseschichten SK1 und/oder SK2 600 bis 750 kg/m$^3$ beträgt, wie zum Beispiel 600 bis 700 kg/m$^3$. Solche Haftklebemassen weisen insbesondere eine besonders hohe Schlagzähigkeit in z-Richtung und in der x,y-Ebene sowie sehr gute Ball drop-Werte auf.

Eine geeignete Folie ist unter der Handelsbezeichnung Hostaphan ® RNK erhältlich. Diese Folie ist hochtransparent, biaxial orientiert und besteht aus drei coextrudierten Schichten.

Zur Herstellung der Folie kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren können die Folienträgerschichten F Deckschichten aufweisen, beispielsweise Sperrschichten, die ein Eindringen von Komponenten aus der Klebemasse in die Folie oder umgekehrt unterbinden. Diese Deckschichten können auch Barriereeigenschaften haben, um so ein Durchdiffundieren von Wasserdampf und/oder Sauerstoff zu verhindern.

Die Zugfestigkeit der Folie liegt bei größer 100 N/mm$^2$, bevorzugter bei größer 150 N/mm$^2$, noch bevorzugter bei größer 180 N/mm$^2$, und insbesondere bei größer 200 N/mm$^2$, wie zum Beispiel bei größer 250 N/mm$^2$, in Längsrichtung, und bei größer 100 N/mm$^2$, bevorzugter bei größer 150 N/mm$^2$, noch bevorzugter bei größer 180 N/mm$^2$, und insbesondere bei größer 200 N/mm$^2$, wie zum Beispiel bei größer 250 N/mm$^2$, in Querrichtung (angegebene Werte jeweils in Bezug auf die weiter hinten angegebene Messmethode R1). Die Folie bestimmt maßgeblich die Zugfestigkeit des Haftklebestreifens. Vorzugsweise weist der Haftklebestreifen die gleichen Werte für die Zugfestigkeit auf wie die eingesetzte Folie.

Der Elastizitätsmodul der Folie liegt vorzugsweise bei mehr als 0,5 GPa, bevorzugter bei mehr als 1 GPa und insbesondere bei mehr als 2,5 GPa, bevorzugt sowohl in der Längsrichtung als auch in der Querrichtung.

## Herstellung und Ausgestaltung des Haftklebestreifens

Die Herstellung und Verarbeitung der Selbstklebemassen kann sowohl aus der Lösung als auch aus der Schmelze erfolgen. Das Aufbringen der Selbstklebemassen auf die Folienträgerschicht kann durch direkte Beschichtung oder durch Laminierung, insbesondere Heißlaminierung erfolgen.

Vorteilhaft können die äußeren, frei liegenden Flächen der außenliegenden Klebemassenschichten SK1 und/oder SK2 des erfindungsgemäßen Haftklebebstreifens mit beidseitig antiadhäsiv beschichteten Materialien ausgerüstet sein wie ein Trennpapier oder eine Trennfolie, auch Liner genannt, und zwar als temporärer Träger. Ein Liner (Trennpapier, Trennfolie) ist nicht Bestandteil eines Klebebandes, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden.

Typische Konfektionierformen der erfindungsgemäßen Haftklebestreifen sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden. Diese Verbindung kann durch die Vorbehandlung der Folienoberflächen optimiert werden.

Der allgemeine Ausdruck "Klebestreifen" (Haftklebestreifen), synonym auch "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Der Haftklebestreifen weist somit eine Längsausdehnung (x-Richtung) und eine Breitenausdehnung (y-Richtung) auf. Der Haftklebestreifen weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebestreifens möglichst gleich, vorzugsweise exakt gleich.

Der erfindungsgemäße Haftklebestreifen liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleich bleibend ausgebildet ist.

Ein aus dem erfindungsgemäßen Haftklebestreifen gebildeter Stanzling kann insbesondere eine äußere Stanzkante und eine innere Ausnehmung ausweisen, so dass er rahmenförmig vorliegt. Dabei können einzelne Stege eine Breite von weniger als 5 mm oder von weniger als 2,5 mm oder sogar von weniger als 1 mm aufweisen. Die erfindungsgemäße Ausgestaltung der Haftklebestreifen führt zu einer vorteilhaften Handhabbarkeit insbesondere auch solch filigraner Stanzlinge. Der im erfindungsgemäßen Haftklebestreifen vorgesehene Folienträger führt in den Stanzlingen zu ausgeprägter Steifheit, so dass der Stanzprozess und das Platzieren der Stanzlinge vereinfacht werden.

Der Haftklebestreifen, insbesondere in Bahnform, kann in Form einer Rolle, also in Form einer archimedischen Spirale auf sich selbst aufgerollt, hergestellt werden.

Der dreischichtige Haftklebestreifen (also ohne Berücksichtigung eventuell vorgesehener Liner) weist vorzugsweise eine Dicke von 45 $\mu$m bis 4000 $\mu$m auf, bevorzugter von 60 $\mu$m bis 1000 $\mu$m, noch bevorzugter von 70 $\mu$m bis 500 $\mu$m und insbesondere von 80 $\mu$m bis 300 $\mu$m.

## Eigenschaften der erfindungsgemäßen Haftklebestreifen

Die erfindungsgemäßen Haftklebestreifen zeichnen sich durch ein hervorragendes Anwendungsprofil, d.h. durch sehr gute anwendungs- und klebtechnische Eigenschaften aus.

Insbesondere wird die erfindungsgemäß gestellte Aufgabe gelöst. So hat sich herausgestellt, dass die erfindungsgemäßen Haftklebestreifen über ein verbessertes Schockabsorptionsvermögen verfügen, und insbesondere über verbesserte Schlagzähigkeiten.

Daneben verfügen die erfindungsgemäßen Haftklebemassen beispielsweise über ein günstiges Stauch-/Härteverhalten und ein sehr gutes Kompressionsvermögen.

Ferner verfügen die erfindungsgemäßen Haftklebemassen über eine gute Klebkraft auf rauen Untergründen, gute Dämpfungs- und/oder Abdichteigenschaften bzw. eine gute Anschmiegsamkeit auf unebenen Untergründen.

Die nähere Erläuterung des Schockabsorptionsvermögens der erfindungsgemäßen Haftklebemassen erfolgt in den Beispielen.

## Figuren

Anhand der nachfolgend beschriebenen Figuren werden besonders vorteilhafte Ausführungen der Erfindung näher erläutert, ohne damit die Erfindung unnötig einschränken zu wollen.

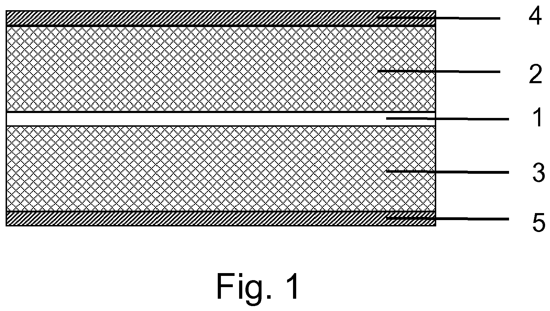

In Figur 1 ist der schematische Aufbau eines erfindungsgemäßen dreischichtigen Haftklebstreifens aus drei Schichten 1, 2, 3 als Querschnitt dargestellt.

Der Streifen umfasst einen nichtdehnbaren Folienträger 1 (Schicht F) in Form einer beidseitig geätzten PET-Folie. Auf der Oberseite und auf der Unterseite der PET-Folie 1 sind zwei außenliegende selbstklebende Klebemassenschichten 2, 3 (Schicht SK1 und Schicht SK2) vorhanden. Die selbstklebenden Klebemassenschichten 2, 3 (Schichten SK1 und SK2) sind in der dargestellten beispielhaften Ausführung ihrerseits jeweils mit einem Liner 4, 5 eingedeckt.

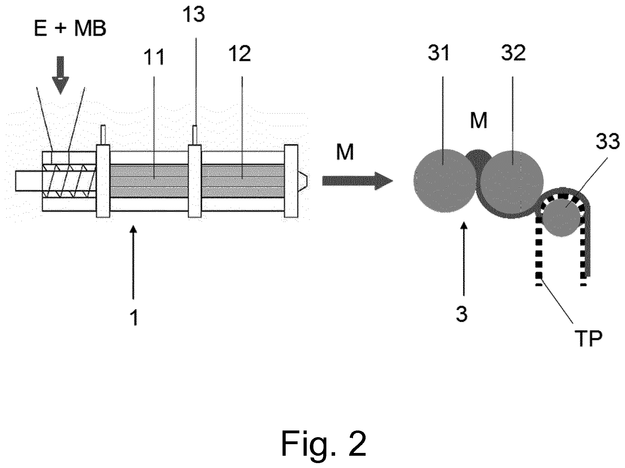

Weiterhin umfasst die Erfindung ein Verfahren zur Herstellung eines erfindungsgemäßen Haftklebestreifens, siehe Figur 2, wobei

- die Bestandteile zur Bildung einer Klebemasse wie Polymere, Harze oder Füllstoffe und nicht expandierte Mikroballons in einem ersten Mischaggregat gemischt werden und unter Überdruck auf Expansionstemperatur erhitzt werden,
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons auf ein bahnförmiges nichtdehnbares Trägermaterial aufgebracht wird,

- die gleiche Klebemassemischung mitsamt der expandierten Mikroballons oder eine andere ebenfalls erfindungsgemäß einsetzbare Klebemassemischung mitsamt der expandierten Mikroballons auf der anderen Seite des bahnförmigen Trägermaterials aufgebracht wird (nicht gezeigt).

Weiterhin umfasst die Erfindung ein Verfahren zur Herstellung eines erfindungsgemäßen Haftklebestreifens, siehe ebenfalls Figur 2, wobei

- die Bestandteile zur Bildung einer Klebemasse wie Polymere, Harze oder Füllstoffe und nicht expandierte Mikroballons in einem ersten Mischaggregat gemischt werden und auf Expansionstemperatur erhitzt werden,
- die Mikroballons während des Mischens zumindest teilweise expandiert werden, bevorzugt vollständig expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons auf ein bahnförmiges nichtdehnbares Trägermaterial aufgebracht wird,
- die gleiche Klebemassemischung mitsamt der expandierten Mikroballons oder eine andere ebenfalls erfindungsgemäße Klebemassemischung mitsamt der expandierten Mikroballons auf der anderen Seite des bahnförmigen Trägermaterials aufgebracht wird (nicht gezeigt).

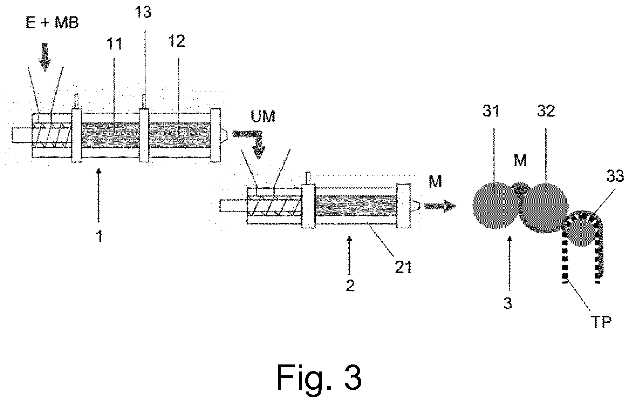

Ebenso umfasst die Erfindung ein Verfahren zur Herstellung eines erfindungsgemäßen Haftklebestreifens, siehe Figur 3, wobei

- die Bestandteile zur Bildung einer Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,
- die gemischte, insbesondere homogene Klebemasse aus dem ersten Mischaggregat in ein zweites Aggregat übergeben werden und unter Überdruck auf Expansionstemperatur erhitzt werden
- die Mikroballons in dem zweiten Aggregat oder beim Austritt aus dem zweiten Aggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons auf ein bahnförmiges nichtdehnbares Trägermaterial aufgebracht wird,
- die gleiche Klebemassemischung mitsamt der expandierten Mikroballons oder eine andere ebenfalls erfindungsgemäß einsetzbare Klebemassemischung mitsamt der expandierten Mikroballons auf der anderen Seite des bahnförmigen Trägermaterials aufgebracht wird (nicht gezeigt).

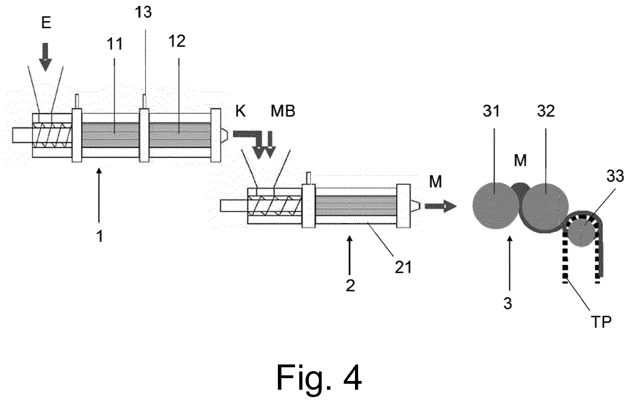

Ebenso betrifft die Erfindung ein Verfahren zur Herstellung eines erfindungsgemäßen Haftklebstreifens, siehe Figur 4, wobei

- die Bestandteile zur Bildung einer Klebemasse wie Polymere, Harze oder Füllstoffe in einem ersten Mischaggregat gemischt werden,
- die gemischte, insbesondere homogene Klebemasse aus dem ersten Mischaggregat in ein zweites Mischaggregat übergeben wird, in das gleichzeitig die nicht expandierten Mikroballons aufgegeben werden,
- die Mikroballons in dem zweiten Mischaggregat oder beim Austritt aus dem zweiten Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons auf ein bahnförmiges nichtdehnbares Trägermaterial aufgebracht wird,
- die gleiche Klebemassemischung mitsamt der expandierten Mikroballons oder eine andere ebenfalls erfindungsgemäß einsetzbare Klebemassemischung mitsamt der expandierten Mikroballons auf der anderen Seite des bahnförmigen nichtdehnbares Trägermaterials aufgebracht wird (nicht gezeigt).

Gemäß einer bevorzugten Ausführungsform der Erfindung wird die Klebemasse in einem Walzenauftragswerk ausgeformt und auf das Trägermaterial aufgebracht.

Mit Mikroballons geschäumte Massen müssen in der Regel vor der Beschichtung nicht entgast werden, um ein gleichmäßiges, geschlossenes Beschichtungsbild zu erhalten. Die expandierenden Mikroballons verdrängen die während der Compoundierung in die Klebemasse eingeschlossene Luft. Bei hohen Durchsätzen ist es dennoch ratsam, die Massen vor der Beschichtung zu entgasen, um eine gleichmäßige Massevorlage im Walzenspalt zu erhalten. Die Entgasung erfolgt idealerweise unmittelbar vor dem Walzenauftragswerk bei Mischtemperatur und einem Differenzdruck zum Umgebungsdruck von mindestens 200 mbar.

Des Weiteren ist vorteilhaft, wenn

- das erste Mischaggregat ein kontinuierliches Aggregat ist, insbesondere ein Planetwalzenextruder, ein Doppelschneckenextruder oder ein Stiftextruder,
- das erste Mischaggregat ein diskontinuierliches Aggregat ist, insbesondere ein Z-Kneter oder ein Innenmischer,
- das zweite Mischaggregat ein Planetwalzenextruder, ein Einschnecken- oder Doppelschneckenextruder oder ein Stiftextruder und/oder
- das Ausformaggregat, in dem die Klebemasse mitsamt der expandierten Mikroballons zu einer Trägerschicht ausgeformt wird, ein Kalander, ein Walzenauftragswerk oder ein Spalt, gebildet von einer Walze und einem feststehenden Rakel, ist.

Mit den erfindungsgemäßen Verfahren sind alle vorbekannten und in der Literatur beschriebenen Komponenten von Klebemassen, insbesondere selbstklebende, lösemittelfrei verarbeitbar.

Im Folgenden werden die oben beschriebenen, innerhalb des Erfindungsgedankens liegenden Verfahren in besonders hervorragend ausgestalteten Varianten veranschaulicht, ohne sich durch die Wahl der abgebildeten Figuren unnötig beschränken zu wollen.

Es zeigen

Figur 2    das Verfahren mit einem Mischaggregat, wobei die Mikroballons direkt im ersten Mischaggregat zugesetzt werden,

Figur 3    das Verfahren mit zwei Mischaggregaten, wobei die Mikroballons im ersten Mischaggregat zugesetzt werden, sowie

Figur 4    das Verfahren mit zwei Mischaggregaten, wobei die Mikroballons erst im zweiten Mischaggregat zugesetzt werden.

In der Figur 2 ist ein besonders vorteilhaft gestaltetes Verfahren zur Herstellung eines geschäumten druckempfindlichen Haftklebstreifens gezeigt.

In einem kontinuierlichen Mischaggregat wie zum Beispiel einem Planetwalzenextruder (PWE) wird die Haftklebemasse hergestellt.

Dazu werden die Edukte E, die die Klebemasse bilden sollen, in den Planetwalzenextruder PWE 1 aufgegeben. Gleichzeitig werden die nicht expandierten Mikroballons MB während des Compoundierprozesses in die Selbstklebemasse homogen eingearbeitet.

Die erforderlichen Temperaturen zur homogenen Herstellung der Selbstklebemasse und zur Expansion der Mikroballons sind so aufeinander abgestimmt, dass die Mikroballons während des Mischens zumindest beginnen zu expandieren und bevorzugt beim Austritt aus dem PWE 1 durch den Druckabfall bei Düsenaustritt in der Selbstklebemasse M vollständig aufschäumen und dabei die Masseoberfläche durchbrechen.

Mit einem Walzenauftragswerk 3 als Ausformaggregat wird diese schaumartige Klebemasse M kalandriert und auf ein bahnförmiges nichtdehnbares Trägermaterial TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trägermaterial TP über eine Aufnahmewalze 33 geführt, so dass das Trägermaterial TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt. Der Klebkraftabfall durch die Mikroballons kann dadurch deutlich verringert werden.

Die gleiche Klebemassemischung mitsamt der expandierten Mikroballons oder eine andere ebenfalls erfindungsgemäß einsetzbare Klebemassemischung mitsamt der expandierten Mikroballons wird anschließend in analoger Weise auf der anderen Seite des bahnförmigen Trägermaterials aufgebracht (nicht gezeigt).

In der Figur 3 ist ein weiteres besonders vorteilhaft gestaltetes Verfahren zur Herstellung eines geschäumten druckempfindlichen Haftklebstreifens gezeigt.

Der Planetwalzenextruder PWE 1 weist zwei hintereinander geschaltete Mischzonen 11, 12 auf, in denen sich eine Zentralspindel dreht. Des Weiteren sind sechs Planetenspindeln je Heizzone vorhanden. In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Zweischneckenextruder homogen in die Selbstklebemasse eingearbeitet, oberhalb der Expansionstemperatur erhitzt und geschäumt.

Dazu wird die aus den Edukten E gebildete Klebemasse K hier in den Zweischneckenextruder ESE 2 aufgegeben, gleichzeitig werden die Mikroballons MB eingefüllt. Der Zweischneckenextruder ESE weist über die Lauflänge 21 insgesamt vier Heizzonen auf.

Ein geeignetes Gerät ist beispielsweise ein Zweischneckenextruder der Firma Kiener.

Die geschäumten Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges nichtdehnbares Trägermaterial TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trägermaterial TP über eine Aufnahmewalze 33 geführt, so dass das Trägermaterial TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt. Der Klebkraftabfall durch die Mikroballons kann dadurch deutlich verringert werden.

Die gleiche Klebemassemischung mitsamt der expandierten Mikroballons oder eine andere ebenfalls erfindungsgemäß einsetzbare Klebemassemischung mitsamt der expandierten Mikroballons wird anschließend in analoger Weise auf der anderen Seite des bahnförmigen Trägermaterials aufgebracht (nicht gezeigt).

In der Figur 4 ist ein weiteres besonders vorteilhaft gestaltetes Verfahren zur Herstellung eines geschäumten druckempfindlichen Haftklebstreifens gezeigt.

In einem kontinuierlichen Mischaggregat wie zum Beispiel einem Planetwalzenextruder (PWE) wird die Haftklebemasse hergestellt.

Hier werden die Edukte E, die die Klebemasse bilden sollen, in den Planetwalzenextruder PWE 1 aufgegeben. Der Planetwalzenextruder PWE 1 weist zwei hintereinander geschaltete Mischzonen 11, 12 auf, in denen sich eine Zentralspindel dreht. Des Weiteren sind 6 Planetenspindeln je Heizzone vorhanden.

In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges nichtdehnbares Trägermaterial beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trägermaterial TP über eine Aufnahmewalze 33 geführt, so dass das Trägermaterial TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt. Der Klebkraftabfall durch die Mikroballons kann dadurch deutlich verringert werden.

Die gleiche Klebemassemischung mitsamt der expandierten Mikroballons oder eine andere ebenfalls erfindungsgemäß einsetzbare Klebemassemischung mitsamt der expandierten Mikroballons wird anschließend in analoger Weise auf der anderen Seite des bahnförmigen Trägermaterials aufgebracht (nicht gezeigt).

Mit sinkendem Spaltdruck im Walzenspalt verringern sich die Verklebungsflächen der beschichteten, geschäumten Selbstklebemassen, da die Mikroballons dann weniger stark zurückgedrückt werden, wie der Figur 2 entnommen werden kann. Die Figur 2 zeigt die Verklebungsflächen in Abhängigkeit vom Beschichtungsverfahren beziehungsweise -parameter. Der benötigte Spaltdruck ist stark abhängig von dem verwendeten Massesystem, je höher die Viskosität, desto größer sollte der Spaltdruck sein, abhängig von der gewünschten Schichtdicke und der gewählten Beschichtungsgeschwindigkeit. In der Praxis hat sich ein Spaltdruck von größer 4 N/mm bewährt, unter besonders hohen Beschichtungsgeschwindigkeiten größer 50 m/min, bei niedrigen Masseaufträgen (Flächengewichten kleiner 70 g/m$^2$) und hochviskosen Massen (50.000 Pa*s bei 0,1 rad und 110 °C) können auch Spaltdrücke größer 50 N/mm benötigt werden.

Es hat sich bewährt, die Temperatur der Walzen der Expansionstemperatur der Mikroballons anzupassen. Idealerweise liegt die Walzentemperatur der ersten Walzen über der Expansionstemperatur der Mikroballons, um ein Nachschäumen der Mikroballons zu ermöglichen, ohne sie zu zerstören. Die letzte Walze sollte eine Temperatur gleich oder unter der Expansionstemperatur aufweisen, damit die Mikroballonhülle erstarren kann und sich die erfindungsgemäße, glatte Oberfläche ausbildet.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern. Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Erfindungsgemäß wird vorgeschlagen, die Beschichtung der geschäumten Klebemassen lösungsmittelfrei mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die geschäumte Klebemasse beim Durchgang durch einen oder mehrere Walzenspalte auf die gewünschte Dicke ausgeformt wird.

Als besonders vorteilhaft hat sich dabei erwiesen, die Temperaturführung der einzelnen Walzen so zu wählen, dass gegebenenfalls eine kontrollierte Nachschäumung stattfinden kann, in der Weise, dass übergebende Walzen eine Temperatur oberhalb oder gleich der Schäumungstemperatur der gewählten Mikroballon-Type aufweisen können, während abnehmende Walzen eine Temperatur unterhalb oder gleich der Schäumungstemperatur haben sollten, um eine unkontrollierte Schäumung zu verhindern, und wobei alle Walzen einzeln auf Temperaturen von 30 bis 220 °C eingestellt werden können.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

In einem alternativen Herstellungsverfahren werden alle Bestandteile der Klebemasse in einem Lösemittelgemisch (Benzin/Toluol/Aceton) aufgelöst. Die Mikroballons werden in Benzin angeschlämmt und in die gelöste Klebemasse eingerührt. Hierzu können grundsätzlich die bekannten Compoundier- und Rühreinheiten eingesetzt werden, wobei darauf zu achten ist, dass die Mikroballons bei der Vermischung noch nicht expandieren. Sobald die Mikroballons homogen in der Lösung verteilt sind, kann die Klebemasse beschichtet werden, wobei wiederum Beschichtungssysteme gemäß des Standes der Technik eingesetzt werden können. Beispielsweise kann die Beschichtung durch einen Rakel auf einen konventionellen PET-Liner geschehen. Im nächsten Schritt wird die so hergestellte Klebmassenschicht bei 100 °C für 15 min getrocknet. In keinem der vorgenannten Schritte kommt es zu einer Expansion der Mikroballons.

Auf die freie Oberfläche der so hergestellten und getrockneten Klebmassenschicht wird die nichtdehnbare Folienschicht F kaschiert. Auf deren zweite Oberfläche wird die freie Oberfläche einer zweiten derart hergestellten, ebenfalls getrockneten Klebmassenschicht kaschiert, so dass ein ungeschäumter Dreischichtverbund aus der innenliegenden Folienschicht und zwei mit Linern versehenen Klebemassenschichten resultiert.

Alternativ kann die Folienschicht F direkt mit den mit Mikroballons versehenen, ungeschäumten Klebemassen gleichzeitig oder nacheinander beschichtet werden, woraufhin diese noch offenliegenden Klebmassenschichten bei 100 °C für 15 min getrocknet und dann mit Linern abgedeckt werden, so dass der ungeschäumte Dreischichtverbund resultiert.

Nach dem Trocknen werden die Klebeschichten in einem passenden Temperatur-ZeitFenster, etwa für 5 min bei 150 °C oder für 1 min bei 170 °C, im Ofen geschäumt, und zwar abgedeckt zwischen den zwei Linern, um eine besonders glatte Oberfläche zu erzeugen.

Die so erzeugte Oberfläche weist eine Rauigkeit $R_a$ kleiner 15 $\mu$m, besonders bevorzugt kleiner 10 $\mu$m auf, ganz besonders bevorzugt von kleiner 3 $\mu$m auf.

Die Oberflächenrauigkeit $R_a$ ist eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs. Anders ausgedrückt ist $R_a$ die arithmetische Mittenrauigkeit, d.h. der arithmetische Mittelwert aller Profilwerte des Rauheitsprofils. Gemessen wird $R_a$ mittels Lasertriangulation.

Die Expansionstemperatur wird insbesondere höher als die Trocknungstemperatur gewählt, um die Expansion der Mikroballons bei der Trocknung zu vermeiden.

Nachfolgend wird die Erfindung durch einige Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

**Beispiele**

Im Folgenden wird die Herstellung von erfindungsgemäßen Haftklebestreifen umfassend einen Folienträger aus PET mit unterschiedlicher Dicke und Selbstklebemasseschichten (SKMS) mit unterschiedlichem Mikroballongehalt an Expancel 920 DU20 beschrieben. Hierzu wurde zuerst eine 40 gew.-%ige Klebelösung in Benzin/Toluol/Aceton hergestellt von 50,0 Gew.-% Kraton D1102AS, 45,0 Gew.-% Dercolyte A115, 4,5 Gew.-% Wingtack 10 und 0,5 Gew.-% Alterungsschutzmittel Irganox 1010. Die Gewichtsanteile der gelösten Bestandteile beziehen sich dabei jeweils auf das Trockengewicht der resultierenden Lösung. Die genannten Bestandteile der Klebemasse sind wie folgt charakterisiert:

| | |
|---|---|
| Kraton D1102AS: | Styrol-Butadien-Styrol-Triblockcopolymer der Firma Kraton Polymers mit 17 Gew.-% Diblock, Blockpolystyrolgehalt: 30 Gew.-% |
| Dercolyte A 115: | festes $\alpha$-Pinen-Klebharz mit einer Ring und Ball-Erweichungstemperatur von 115 °C und einem DACP von 35 °C |
| Wingtack 10: | Flüssiges Kohlenwasserstoffharz der Firma Cray Valley |
| Irganox 1010: | Pentaerythritoltetrakis(3-(3,5-di-tert-butyl-4-hydroxyphenyl)propionat) der BASF SE |

Die Lösung wurde anschließend mit 1 Gew.-%, 2 Gew.-% oder 3 Gew.-% unexpandierten Mikroballons versetzt, wobei die Mikroballons als Anschlämmung in Benzin eingesetzt wurden. Die Gewichtsanteile der Mikroballons beziehen sich hier jeweils auf das Trockengewicht der eingesetzten Lösung, zu der sie gegeben wurden (d.h. das Trockengewicht der eingesetzten Lösung wird als 100% festgesetzt). Bei den Mikroballons handelte es sich jeweils um Expancel 920 DU20. Die erhaltene Mischung wurde dann mit einem Streichbalken auf einen PET-Liner, ausgerüstet mit einem trennenden Silikon, in der gewünschten Schichtdicke ausgestrichen, anschließend wurde bei 100 °C für 15 min das Lösungsmittel abgedampft und so die Masseschicht getrocknet.

Auf die freie Oberfläche der so hergestellten und getrockneten Klebmassenschicht wurde eine nichtdehnbare Folienschicht aus PET kaschiert, wobei die Folie eine Dicke von 12 $\mu$m, 36 $\mu$m oder 50 $\mu$m aufwies (die PET-Folien der genannten Dicken werden jeweils unter der Marke Tenolan OCN des Herstellers Fatra vertrieben).Die Zugfestigkeit der 12 $\mu$m dicken PET-Folie betrug 210 N/mm$^2$ in Längsrichtung und 210 N/mm$^2$ in Querrichtung. Die Reißdehnung der 12 $\mu$m dicken Folie betrug 124 % in Längsrichtung und 147 % in Querrichtung. Die Zugfestigkeit der 36 $\mu$m dicken PET-Folie betrug 152 N/mm$^2$ in Längsrichtung und 161 N/mm$^2$ in Querrichtung. Die Reißdehnung der 36 $\mu$m dicken Folie betrug 145 % in Längsrichtung und 83 % in Querrichtung. Die Zugfestigkeit der 50 $\mu$m dicken PET-Folie betrug 151 N/mm$^2$ in Längsrichtung und 160 N/mm$^2$ in Querrichtung. Die Reißdehnung der 50 $\mu$m dicken Folie betrug 148 % in Längsrichtung und 81 % in Querrichtung.

Auf deren zweite Oberfläche wurde die freie Oberfläche einer zweiten identisch hergestellten, ebenfalls getrockneten Klebmassenschicht kaschiert, so dass ein ungeschäumter symmetrischer Dreischichtverbund aus der innenliegenden Folienschicht und zwei mit Linern versehenen Klebemassenschichten resultierte. Der Dreischichtverbund hat dementsprechend zum einen in Bezug auf die Zusammensetzung der Schichten einen symmetrischen Aufbau, indem die beiden an die Folienschicht angrenzenden Klebemasseschichten chemisch identisch sind. Zum anderen hat der Dreischichtverbund dementsprechend einen strukturell symmetrischen Aufbau, indem die beiden an die Folienschicht angrenzenden Klebemasseschichten gleich dick sind und dieselbe Dichte aufweisen.

Nach dem Trocknen wurden die Klebeschichten für 5 min bei 150 °C zwischen den beiden Linern im Ofen geschäumt, woraus erfindungsgemäße Haftklebestreifen mit einer Dicke von jeweils etwa 150 $\mu$m resultierten (Beispiele 1 bis 9). Die Dicke von etwa 150 $\mu$m konnte dabei jeweils durch eine geeignete Auswahl der Streichdicke der die unexpandierten Mikroballons enthaltenden Klebemischung im Herstellungsprozess erhalten werden. Die Dicke bezieht sich auf die erfindungsgemäßen Haftklebestreifen, d.h. ohne PET-Liner.

Durch das Schäumen zwischen zwei Linern sind Produkte mit besonders glatten Oberflächen erhältlich. Alle aufgeführten Beispiele weisen einen $R_a$- Wert kleiner 15 $\mu$m auf. Durch Ausstanzen wurden Haftklebestreifen der gewünschten Abmessungen erhalten.

Zum Vergleich wurden ferner entsprechende Haftklebestreifen - allerdings ohne nichtdehnbare Folienschicht - hergestellt, d.h. Haftklebestreifen bestehend aus einer einzigen erfindungsgemäßen Selbstklebemasseschicht mit 1 Gew.-%, 2 Gew.-% oder 3 Gew.-% Expancel 920 DU20. Die Gewichtsanteile der Mikroballons beziehen sich hier jeweils auf das Trockengewicht der Klebelösung, zu der sie im Herstellungsprozess gegeben wurden (d.h. das Trockengewicht der eingesetzten Lösung wird als 100% festgesetzt). Die Selbstklebemasseschichten waren somit chemisch identisch zu denen der Beispiele 1 bis 9. In diesen Fällen wurde jeweils auf die freie Oberfläche der hergestellten und getrockneten Klebmassenschicht anstelle einer nichtdehnbaren Folienschicht ein zweiter PET-Liner wie oben beschrieben kaschiert und die Klebemassenschicht anschließend für 5 min bei 150 °C zwischen den beiden Linern im Ofen geschäumt. Durch das Schäumen zwischen zwei Linern sind auch hier Produkte mit besonders glatten Oberflächen erhältlich (mit $R_a$-Werten kleiner 15 $\mu$m). Durch Ausstanzen wurden Haftklebestreifen der gewünschten Abmessungen erhalten (Vergleichsbeispiele 1 bis 3). Die Haftklebestreifen ohne nichtdehnbare Folienschicht wurden ebenfalls so hergestellt, dass sie eine Dicke von etwa 150 $\mu$m aufwiesen. Auch hier bezieht sich die Dicke auf die Haftklebestreifen ohne PET-Liner.

Ferner wurde, ebenfalls zum Vergleich, ein Haftklebestreifen hergestellt, der sich vom erfindungsgemäßen Haftklebestreifen aus Beispiel 5 lediglich dadurch unterschied, dass anstelle einer nichtdehnbaren Folienschicht aus PET einer Dicke von 36 $\mu$m ein dehnbarer Polyurethan-Folienträger mit einer vergleichbaren Dicke von 30 $\mu$m verwendet wurde (Vergleichsbeispiel 4). Die Reißdehnung des Polyurethan-Folienträgers betrug sowohl in der Längsrichtung, als auch in der Querrichtung mehr als 300%. Die Herstellung erfolgte analog zum erfindungsgemäßen Haftklebestreifen aus Beispiel 5. Der resultierende Haftklebestreifen wies ebenfalls eine Dicke von etwa 150 $\mu$m auf. Auch hier bezieht sich die Dicke auf den Haftklebestreifen ohne PET-Liner.

Die nachstehende Tabelle 1 zeigt die Schockresistenzen der erfindungsgemäßen Haftklebestreifen mit PET-Folienträger als Beispiele 1 bis 9, der Haftklebestreifen ohne Folienträger als Vergleichsbeispiele 1 bis 3 und des Haftklebestreifens mit einem Polyurethan-Folienträger als Vergleichsbeispiel 4.

**EP 3 333 235 B1**

Tabelle 1: Schockresistenzen von erfindungsgemäßen Haftklebestreifen und von Vergleichsbeispielen.

| Versuch | Dicke PET-Folie ($\mu$m) | Mikroballongehalt (Gew.-%) | Dichte SKMS[1] (kg/m$^3$) | Ball drop (cm) | Schlagzähig-keit[2] (J) | Push Out (N) |
|---|---|---|---|---|---|---|
| Beispiel 1 | 12 | 1 | 830 | 45 | 0,81 | 182 |
| Beispiel 2 | 36 | 1 | 822 | 25 | 0,75 | 170 |
| Beispiel 3 | 50 | 1 | 815 | 25 | 0,72 | 133 |
| Vergleichsbeispiel 1 | keine | 1 | 820 | 85 | 1,04 | 182 |
| Beispiel 4 | 12 | 2 | 720 | 185 | 1,12 | 140 |
| Beispiel 5 | 36 | 2 | 720 | 225 | 1,18 | 134 |
| Beispiel 6 | 50 | 2 | 725 | 125 | 0,97 | 131 |
| Vergleichsbeispiel 2 | keine | 2 | 715 | 165 | 1,10 | 163 |
| Beispiel 7 | 12 | 3 | 603 | 165 | 0,96 | 127 |
| Beispiel 8 | 36 | 3 | 618 | 125 | 0,78 | 118 |
| Beispiel 9 | 50 | 3 | 611 | 145 | 0,69 | 93 |
| Vergleichsbeispiel 3 | keine | 3 | 610 | 185 | 0,97 | 136 |
| Vergleichsbeispiel 4 | 30 (PU-Folie) | 2 | 718 | 145 | 0,93 | 140 |

[1] SKMS = Selbstklebemasseschicht; [2] in z-Richtung

Die Tabelle zeigt, dass die erfindungsgemäßen Haftklebestreifen sehr gute Schockresistenzen, insbesondere hohe Ball drop-Werte, Schlagzähigkeiten in z-Richtung sowie Push-out-Festigkeiten, aufweisen. Auffällig ist, dass Mikroballongehalte in den Selbstklebemasseschichten von 2 Gew.-%, was in einer absoluten Dichte der Selbstklebemasseschichten von 720 kg/m$^3$ mündet, zu Haftklebestreifen mit besonders guten Schockresistenzen führen. Hervorragende Schockresistenzen weisen dabei insbesondere die Haftklebestreifen aus den Beispielen 4 und 5 auf, deren PET-Folie 12 $\mu$m bzw. 36 $\mu$m dick ist.

Der erfindungsgemäße Haftklebestreifen aus Beispiel 5 umfassend einen PET-Träger weist außerdem überraschenderweise eine deutlich verbesserte Schockresistenz gegenüber dem Haftklebestreifen aus Vergleichsbeispiel 4 auf, der einen Polyurethanträger mit vergleichbarer Dicke umfasst. Dies macht sich insbesondere an einem erhöhten Ball drop-Wert und einer erhöhten Schlagzähigkeit in z-Richtung bemerkbar. Offensichtlich zeichnen sich somit erfindungsgemäße Haftklebestreifen mit einem nichtdehnbaren Folienträger durch verbesserte Schockresistenzen gegenüber nicht erfindungsgemäßen Haftklebestreifen mit einem dehnbaren Folienträger aus, d.h. einem Folienträger mit einer Reißdehnung von mindestens 300% sowohl in der Längsrichtung, als auch in der Querrichtung.

In weiteren Versuchen wurde der Einfluss der Größe der von Mikroballons (MB) gebildeten Hohlräume in Selbstklebemasseschichten auf deren Schockresistenz getestet. Ebenso wurde der Einfluss des Gehalts an Mikroballons in Selbstklebemasseschichten bzw. der dadurch einstellbaren Dichte in Selbstklebemasseschichten auf deren Schockresistenz getestet. Die Selbstklebemasseschichten wurden analog denen der Vergleichsbeispiele 1 bis 3 hergestellt, wobei der Gehalt und der Typ der Mikroballons variiert wurden. Als Typen der Mikroballons wurden neben Expancel 920 DU20 ferner Expancel 920 DU40, Expancel 920 DU80 und Expancel 920 DU120 eingesetzt. Die Selbstklebemasseschichten wurden ebenfalls so hergestellt, dass sie eine Dicke von etwa 150 $\mu$m aufwiesen. Auch hier bezieht sich die Dicke auf die Selbstklebemasseschichten ohne PET-Liner.

Die nachstehende Tabelle 2 zeigt die Schockresistenzen der Selbstklebemasseschichten als Vergleichsbeispiele 1 bis 3 und 5 bis 15.

Die Versuche zeigen, dass jene Selbstklebemasseschichten, die unter Verwendung der vergleichsweise kleinen Mikroballons Expancel 920 DU20 bzw. Expancel 920 DU40 hergestellt wurden, signifikant höhere Schockresistenzen aufweisen als jene Selbstklebemasseschichten, die unter Verwendung der vergleichsweise großen Mikroballons Expancel 920 DU80 bzw. Expancel 920 DU120 hergestellt wurden.

Die Versuche zeigen ferner, dass in den Selbstklebemasseschichten bei Mikroballongehalten von etwa 1,5 bis etwa 2,5 Gew.-% die höchsten Schockresistenzen erzielt werden können.

Tabelle 2: Schockresistenzen von in erfindungsgemäßen Haftklebestreifen einsetzbaren Selbstklebemasseschichten.

| Versuch | MB[1]-Typ | MB[1]-Gehalt (Gew.-%) | Dichte SKMS[2] (kg/m$^3$) | Ball drop (cm) | Schlagzähigkeit[3] (J) | Schlagzähig keit[4] (J) |
|---|---|---|---|---|---|---|
| Vergleichsbeispiel 1 | DU20 | 1,0 | 820 | 85 | 1,04 | 0,73 |
| Vergleichsbeispiel 2 | DU20 | 2,0 | 715 | 165 | 1,10 | 0,77 |
| Vergleichsbeispiel 3 | DU20 | 3,0 | 610 | 185 | 0,97 | 1,22 |
| Vergleichsbeispiel 5 | DU20 | 2,3 | 656 | 185 | 1,45 | 1,22 |
| Vergleichsbeispiel 6 | DU20 | 3,3 | 590 | 145 | 1,21 | 1,06 |
| Vergleichsbeispiel 7 | DU40 | 0,9 | 723 | 85 | 1,24 | 0,80 |
| Vergleichsbeispiel 8 | DU40 | 2,0 | 630 | 125 | 1,13 | 0,80 |
| Vergleichsbeispiel 9 | DU40 | 3,0 | 567 | 85 | 0,85 | 0,64 |
| Vergleichsbeispiel 10 | DU80 | 1,5 | 652 | 85 | 1,00 | 0,72 |
| Vergleichsbeispiel 11 | DU80 | 2,0 | 639 | 105 | 0,97 | 0,70 |
| Vergleichsbeispiel 12 | DU80 | 3,0 | 522 | 85 | 0,75 | 0,60 |
| Vergleichsbeispiel 13 | DU120 | 0,5 | 788 | 25 | 0,75 | 0,61 |
| Vergleichsbeispiel 14 | DU120 | 0,9 | 667 | 25 | 0,97 | 0,75 |
| Vergleichsbeispiel 15 | DU120 | 2,0 | 530 | 85 | 0,81 | 0,57 |
| [1] MB = Mikroballon; [2] SKMS = Selbstklebemasseschicht; [3] in z-Richtung; [4] in der x,y-Ebene | | | | | | |

Es fällt ferner auf, dass im Allgemeinen in den Selbstklebemasseschichten die höchsten Schockresistenzen erzielt werden können, wenn sich die absolute Dichte der Selbstklebemasseschichten im Bereich von 600 bis 750 kg/m$^3$, wie zum Beispiel 600 bis 700 kg/m$^3$, bewegt.

Aufgrund dieser Ergebnisse werden in den erfindungsgemäßen Haftklebestreifen solche Selbstklebemasseschichten eingesetzt, die unter Verwendung von vergleichsweise kleinen Mikroballons wie z.B. Expancel 920 DU20 bzw. Expancel 920 DU40 geschäumt worden sind. Ferner empfiehlt es sich, in den erfindungsgemäßen Haftklebestreifen Selbstklebemasseschichten mit Mikroballongehalten von etwa 1,5 bis etwa 2,5 Gew.-% und/oder einer absoluten Dichte von 600 bis 750 kg/m$^3$, wie zum Beispiel 600 bis 700 kg/m$^3$, einzusetzen.

Prüfmethoden

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Reißdehnung, Zugfestigkeit (Messmethode R1)*

Die Reißdehnung und die Zugfestigkeit wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

*Elastizitätsmodul*

Der Elastizitätsmodul gibt den mechanischen Widerstand an, den ein Werkstoff einer elastischen Verformung entgegensetzt. Er wird bestimmt als das Verhältnis der erforderlichen Spannung $\sigma$ zur erzielten Dehnung $\varepsilon$, wobei $\varepsilon$ der Quotient aus der Längenänderung $\Delta L$ und der Länge $L_0$ im Hookeschen Verformungsregime des Probekörpers ist. Die Definition des Elastizitätsmoduls ist beispielsweise im Taschenbuch der Physik erläutert (H. Stöcker (Hrsg.), Taschenbuch der Physik, 2. Aufl., 1994, Verlag Harri Deutsch, Frankfurt, S. 102 - 110).

Zur Bestimmung des Elastizitätsmoduls einer Folie wurde das Zugdehnungsverhalten an einem Prüfling vom Typ 2 (rechteckiger 150 mm langer und 15 mm breiter Folien-Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt, wobei der Prüfstreifen zur Ermittlung der Daten mit scharfen Klingen zugeschnitten wurde. Zum Einsatz kam eine Zugprüfmaschine der Fa. Zwick (Modell Z010). Das Zugdehnungsverhalten wurde in Maschinenrichtung (MD) gemessen. Zum Einsatz kam ein 1000 N (Zwick Roell Typ Kap-Z 066080.03.00) bzw. 100 N (Zwick Roell Typ Kap-Z 066110.03.00) Kraftmessdose. Der Elastizitätsmodul wurde aus den Messkurven grafisch durch Bestimmung der Steigung des für das Hookesche-Verhalten charakteristischen Anfangsbereichs der Kurve ermittelt und in GPa angegeben.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*Durchmesser*

Die Bestimmung des mittleren Durchmessers der von den Mikroballons gebildeten Hohlräume in einer Selbstklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller in den 5 REM-Aufnahmen ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

*Dichte*

Die Dichte der ungeschäumten und der geschäumten Klebemasseschichten wird ermittelt durch Quotientenbildung aus Masseauftrag und Dicke der auf einen Träger oder Liner aufgetragenen Klebemassenschicht.

Der Masseauftrag kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners.

Die Dicke einer Klebemasseschicht kann durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Dicke*

Wie bereits die Dicke einer Klebemasseschicht lässt sich auch die Dicke eines Haftklebestreifens bzw. einer Folienträgerschicht über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Statische Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*Kugelfalltest (Schlagzähigkeit, Ball drop)*

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen ABS-Rahmen (Außenmaße 45 mm x 45 mm; Stegbreite 10 mm; Innenmaße (Fensterausschnitt) 25 mm x 25 mm; Dicke 5 mm) geklebt. Auf der anderen Seite des doppelseitigen Klebebands wurde ein PMMA-Fenster von 35 mm x 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagerecht ausgerichtet war und die PMMA-Scheibe frei hängend nach unten zeigte. Auf die so angeordnete Probe wurde senkrecht aus einer Höhe von 25 cm (durch das Fenster des ABS-Rahmens hindurch) eine Stahlkugel (Gewicht 32,6 g) zentriert auf die PMMA-Scheibe fallen gelassen (Messbedingungen 23 °C, 50 % relative Feuchte). Mit jeder Probe wurden drei Untersuchungen durchgeführt, sofern die PMMA-Scheibe sich nicht vorher gelöst hatte. Der Kugelfalltest gilt als bestanden, wenn sich die Verklebung bei keiner der drei Untersuchungen gelöst hat. Die Höhe des Fallgewichtes wurde, jeweils unter Verwendung einer neuen Probe, in 20 cm Schritten so lange erhöht, bis sich die Verklebung (bei zumindest einer der drei Untersuchungen) gelöst hat. Die in der Anmeldung für die getesteten doppelseitigen Klebebänder angegebenen Fallhöhen beziehen sich auf die letzte Höhe, bei der der Test noch bestanden wird.

*Push-out-Festigkeit (z-Ebene)*

Mittels des Push-Out-Tests lassen sich Aussagen darüber gewinnen, wie hoch die Beständigkeit einer Verklebung eines Bauteils in einem rahmenförmigen Körper ist, etwa eines Fensters in einem Gehäuse.

Aus dem zu untersuchenden Klebeband wurde eine rechteckige, rahmenförmige Probe ausgeschnitten (Außenmaße 43 mm x 33 mm; Stegbreite jeweils 2,0 mm, Innenmaße (Fensterausschnitt) 39 mm x 29 mm, Klebefläche auf Ober- und Unterseite jeweils 288 mm$^2$). Diese Probe wurde auf einen rechteckigen ABS-Kunststoffrahmen (ABS = AcrylnitrilButadien-Styrol-Copolymere) (Außenmaße 50 mm x 40 mm, Stegbreite der langen Stege jeweils 8 mm; Stegbreite der kurzen Stege jeweils 10 mm; Innenmaße (Fensterausschnitt) 30 mm x 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm x 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 288 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagerecht ausgerichtet war und die PMMA-Scheibe frei hängend nach unten zeigte.

Ein Druckstempel wird nun mit einer konstanten Geschwindigkeit von 10 mm/min senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft $F_{max}$ im Kraft-Zeit-Diagramm in N) wird als Antwort des Push-Out-Tests registriert.

*Schlagzähigkeit; z-Richtung*

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen PC-Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des doppelseitigen Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme des "DuPont Impact Tester" zentrisch eingesetzt. Der 190 g schwere Schlagkopf wurde so eingesetzt, dass die kreisförmige Aufschlaggeometrie mit dem Durchmesser von 20mm auf die Fensterseite des PC Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht bis die eingebrachte Stoßenergie die Probe durch die Schlagbelastung zerstört und das PC Fenster sich vom PC Rahmen löste.

Um Versuche mit unterschiedlichen Proben vergleichen zu können, wurde die Energie wie folgt berechnet:

$$E\ [J] = \text{Höhe [m]} * \text{Masse Gewicht [kg]} * 9{,}81\ m/s^2$$

Es wurden fünf Proben pro Produkt getestet und der Energiemittelwert als Kennzahl für die Schlagzähigkeit angegeben.

*Querschlagzähigkeit; x,y-Ebene*

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen PC-Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des doppelseitigen Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Klebeverbund aus PC-Rahmen, Klebeband und PC-Scheibe mit den überstehenden Kanten des PC-Rahmens derart in eine Probenhalterung gespannt, dass der Verbund senkrecht ausgerichtet war. Die Probenhalterung wurde anschließend in die vorgesehene Aufnahme des "DuPont Impact Tester" zentrisch eingesetzt. Der 300 g schwere Schlagkopf wurde so eingesetzt, dass die rechteckförmige Aufschlaggeometrie mit den Maßen von 20 mm x 3 mm auf die nach oben gerichtete Stirnseite des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht, bis die eingebrachte Stoßenergie die Probe durch die Querschlagbelastung zerstört und das PC-Fenster sich vom PC-Rahmen löste.

Um Versuche mit unterschiedlichen Proben vergleichen zu können, wurde die Energie wie folgt berechnet:

$$E\ [J] = \text{Höhe [m]} * \text{Masse Gewicht [kg]} * 9{,}81\ kg/m*s^2$$

Es wurden fünf Proben pro Produkt getestet und der Energiemittelwert als Kennzahl für die Querschlagzähigkeit angegeben.

## Patentansprüche

1.   Haftklebestreifen aus zumindest drei Schichten, umfassend

   • eine innenliegende Schicht F aus einem nichtdehnbaren Folienträger, wobei die Folienträgerschicht F sowohl in der Längsrichtung als auch in der Querrichtung eine Reißdehnung von weniger als 300 % wie gemäß Messmethode R1 bestimmt aufweist,
   • eine Schicht SK1 aus einer selbstklebenden Masse, die auf einer der Oberflächen der Folienträgerschicht F angeordnet ist und die auf einer mit Mikroballons geschäumten Vinylaromatenblockcopolymer-Masse basiert,
   • eine Schicht SK2 aus einer selbstklebenden Masse, die auf der der Schicht SK1 gegenüberliegenden Oberfläche der Folienträgerschicht F angeordnet ist und die auf einer mit Mikroballons geschäumten Vinylaromatenblockcopolymer-Masse basiert,
   wobei der mittlere Durchmesser der von den Mikroballons gebildeten Hohlräume in den Selbstklebemasseschichten SK1 und SK2 jeweils unabhängig voneinander 20 bis 40 $\mu$m beträgt, wie gemäß Messmethode Durchmesser bestimmt,
   und wobei der Haftklebestreifen **dadurch gekennzeichnet ist, dass** die Folienträgerschicht F eine Zugfestigkeit in Längsrichtung von größer 100 N/mm$^2$ aufweist und/oder eine Zugfestigkeit in Querrichtung von größer 100 N/mm$^2$ aufweist, wie jeweils gemäß Messmethode R1 bestimmt, und dass die Selbstklebemasseschicht SK1 und/oder SK2 aus folgender Zusammensetzung besteht:

   | | |
   |---|---|
   | • Vinylaromatenblockcopolymere | 20 bis 75 Gew.-% |
   | • Klebharze | 24,6 bis 60 Gew.-% |
   | • Mikroballons | 0,2 bis 10 Gew.-% |
   | • Additive | 0,2 bis 10 Gew.-%. |

2.   Haftklebestreifen nach Anspruch 1, **gekennzeichnet durch** einen in Bezug auf die Zusammensetzung der Schichten symmetrischen Aufbau, indem die geschäumten Vinylaromatenblockcopolymer-Massen der beiden Selbstklebemasseschichten SK1 und SK2 chemisch identisch sind.

3.   Haftklebestreifen nach einem der Ansprüche 1 oder 2, **gekennzeichnet durch** einen strukturell symmetrischen Aufbau, indem die beiden Selbstklebemasseschichten SK1 und SK2 gleich dick sind und/oder dieselbe Dichte aufweisen.

4.   Haftklebestreifen nach einem der vorhergehenden Ansprüche,
**dadurch gekennzeichnet, dass**
als Selbstklebemasseschichten SK1 und/oder SK2 solche auf Basis von Vinylaromatenblockcopolymeren enthaltend Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem, eingesetzt werden.

5. Haftklebestreifen nach einem der vorhergehenden Ansprüche,
**dadurch gekennzeichnet, dass**

als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$ eingesetzt wird,
worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und
- n für eine ganze Zahl $\geq 2$ stehen.

6. Haftklebestreifen nach Anspruch 4 oder 5,
**dadurch gekennzeichnet, dass**
die Vinylaromaten zum Aufbau des Blocks A Styrol, $\alpha$-Methylstyrol und/oder andere Styrol-Derivate umfassen, besonders bevorzugt Styrol.

7. Haftklebestreifen nach einem der Ansprüche 4 bis 6,
**dadurch gekennzeichnet, dass**
das Monomer für den Block B ausgewählt ist aus der Gruppe bestehend aus Butadien, Isopren, Ethylbutadien, Phenylbutadien, Piperylen, Pentadien, Hexadien, Ethylhexadien und Dimethylbutadien sowie einer beliebigen Mischung dieser Monomere.

8. Haftklebestreifen nach einem der vorhergehenden Ansprüche,
**dadurch gekennzeichnet, dass**
der Anteil der Vinylaromatenblockcopolymere, wie insbesondere Styrolblockcopolymere, in Summe bezogen auf die gesamte Selbstklebemasseschicht SK1 oder SK2 mindestens 30 Gew.-%, weiter bevorzugt mindestens 35 Gew.-% und gleichzeitig maximal 65 Gew.-%, ganz besonders bevorzugt maximal 55 Gew. % beträgt.

9. Haftklebestreifen nach einem der vorangehenden Ansprüche,
**dadurch gekennzeichnet, dass**
die Selbstklebemasseschichten SK1 und/oder SK2 auf Basis von Vinylaromatenblockcopolymer und Klebharz aufgebaut sind, wobei vorzugsweise zu mindestens 75 Gew.-% (bezogen auf den Gesamtharzanteil) ein Harz gewählt wird mit einem DACP (diacetone alcohol cloud point) von größer 0 °C, bevorzugt größer 10 °C, wie gemäß Messmethode DACP bestimmt und einer Erweichungstemperatur (Ring & Ball) von größer gleich 70 °C, vorzugsweise größer gleich 100 °C, wie gemäß Messmethode Klebharzerweichungstemperatur bestimmt.

10. Haftklebestreifen nach Anspruch 9,
**dadurch gekennzeichnet, dass**
in der Selbstklebemasseschicht SK1 und/oder SK2 30 bis 50 Gew.-% Klebharz, bezogen auf das Gesamtgewicht der Selbstklebemasseschicht enthalten ist.

11. Haftklebestreifen nach Anspruch 9 oder 10,
**dadurch gekennzeichnet, dass**
es sich bei dem Klebharz zu mindestens 75 Gew.-% um Kohlenwasserstoffharz oder Terpenharz oder eine Mischung dergleichen handelt.

12. Haftklebstreifen nach zumindest einem der vorhergehenden Ansprüche,
**dadurch gekennzeichnet, dass**
der Anteil der Mikroballons in der Selbstklebemasseschicht SK1 und/oder der Selbstklebemasseschicht SK2 zwischen 0,25 Gew.-% und 5 Gew.-%, bevorzugter zwischen 0,5 und 4 Gew.-%, noch bevorzugter zwischen 1 und 3,5 Gew.-%, insbesondere zwischen 1,5 und 2,5 Gew.-% beträgt, jeweils bezogen auf die Gesamtzusammensetzung der Selbstklebe-masseschicht.

13. Haftklebstreifen nach zumindest einem der vorhergehenden Ansprüche,
**dadurch gekennzeichnet, dass**
der mittlere Durchmesser der von den Mikroballons gebildeten Hohlräume in den Selbstklebemasseschichten SK1 und/oder SK2, vorzugsweise in beiden Schichten SK1 und SK2, 20 bis 25 $\mu$m beträgt, wie gemäß Messmethode Durchmesser bestimmt.

14. Haftklebstreifen nach zumindest einem der vorhergehenden Ansprüche,
**dadurch gekennzeichnet, dass**
die Selbstklebemasseschicht SK1 und/oder SK2 aus folgender Zusammensetzung besteht:

| | |
|---|---|
| • Vinylaromatenblockcopolymere | 35 bis 65 Gew.-% |
| • Klebharze | 34,6 bis 45 Gew.-% |
| • Mikroballons | 0,2 bis 10 Gew.-% |
| • Additive | 0,2 bis 10 Gew.-% |

15. Haftklebstreifen nach zumindest einem der vorhergehenden Ansprüche,
**dadurch gekennzeichnet, dass**
die absolute Dichte der geschäumten Selbstklebemasseschicht SK1 und/oder SK2 400 bis 990 kg/m$^3$, vorzugsweise 450 bis 970 kg/m$^3$, bevorzugter 500 bis 900 kg/m$^3$, noch bevorzugter 550 bis 800 kg/m$^3$ und insbesondere 600 bis 750 kg/m$^3$, wie zum Beispiel 600 bis 700 kg/m$^3$, beträgt, und/oder die relative Dichte 0,35 bis 0,99, bevorzugt 0,45 bis 0,97, insbesondere 0,50 bis 0,90 beträgt, wie gemäß Messmethode Dichte bestimmt.

16. Haftklebstreifen nach zumindest einem der vorhergehenden Ansprüche,
**dadurch gekennzeichnet, dass**
die Selbstklebemasseschicht SK1 und/oder SK2 eine Dicke zwischen 20 und 200 $\mu$m, vorzugsweise von 50 $\mu$m aufweist, wie gemäß Messmethode Dichte bestimmt.

17. Haftklebestreifen nach einem der vorangehenden Ansprüche,
**dadurch gekennzeichnet, dass**
eine oder beide Oberflächen der Folienträgerschicht F physikalisch und/oder chemisch vorbehandelt sind.

18. Haftklebestreifen nach Anspruch 17
**dadurch gekennzeichnet, dass**
die Vorbehandlung eine Ätzung und/oder eine Coronabehandlung und/oder eine Primerung ist, vorzugsweise eine Ätzung.

19. Haftklebestreifen nach einem der vorangehenden Ansprüche,
**dadurch gekennzeichnet, dass**
als Material für die Folienträgerschicht F

(i) Polyester, insbesondere Polyethylenterephthalat (PET),
(ii) Polyamid (PA),
(iii) Polyimid (PI) oder
(iv) mono- oder biaxial verstrecktes Polypropylen (PP) verwendet wird.

20. Haftklebestreifen nach einem der vorangehenden Ansprüche,
**dadurch gekennzeichnet, dass**
die Folienträgerschicht F eine Dicke zwischen 5 und 125 $\mu$m, vorzugsweise zwischen 10 und 60 $\mu$m, bevorzugter zwischen 10 und 50 $\mu$m, noch bevorzugter zwischen 10 und 40 $\mu$m, noch bevorzugter zwischen 23 und 40 $\mu$m und insbesondere zwischen 30 und 40 $\mu$m, wie zum Beispiel von 36 $\mu$m, aufweist wie gemäß Messmethode Dicke bestimmt.

21. Haftklebestreifen nach einem der vorangehenden Ansprüche,
**dadurch gekennzeichnet, dass**
die Folienträgerschicht F eine Reißdehnung von weniger als 200 %, bevorzugter von weniger als 150 %, noch bevorzugter von weniger als 100 %, und insbesondere von weniger als 70%, wie zum Beispiel von weniger als 50 %, wie jeweils gemäß Messmethode R1 bestimmt aufweist, sowohl in der Längsrichtung als auch in der Querrichtung.

22. Haftklebstreifen nach zumindest einem der vorhergehenden Ansprüche,
**dadurch gekennzeichnet, dass**
die Folienträgerschicht F eine Zugfestigkeit in Längsrichtung von größer 150 N/mm$^2$, bevorzugt größer 180 N/mm$^2$, und insbesondere größer 200 N/mm$^2$, wie zum Beispiel größer 250 N/mm$^2$, aufweist, und/oder eine Zugfestigkeit in Querrichtung von größer 150 N/mm$^2$, bevorzugt größer 180 N/mm$^2$, und insbesondere größer 200 N/mm$^2$, wie zum Beispiel größer 250 N/mm$^2$, aufweist, wie jeweils gemäß Messmethode R1 bestimmt.

23. Haftklebstreifen nach zumindest einem der vorhergehenden Ansprüche,
**dadurch gekennzeichnet, dass**
der Haftklebestreifen eine Dicke von 45 $\mu$m bis 4000 $\mu$m, vorzugsweise von 60 $\mu$m bis 1000 $\mu$m, bevorzugter von 70 $\mu$m bis 500 $\mu$m und noch bevorzugter von 80 $\mu$m bis 300 $\mu$m aufweist, wie gemäß Messmethode Dicke bestimmt.

24. Verwendung eines Haftklebestreifens nach zumindest einem der vorhergehenden Ansprüche zur Verklebung von Bauteilen wie insbesondere Akkus und elektronischen Geräten wie insbesondere Handys.

**Claims**

1. Pressure-sensitive adhesive strip composed of at least three layers, comprising

   • an inner layer F composed of a nonextensible film carrier, where the film carrier layer F has an elongation at break both in longitudinal direction and in transverse direction of less than 300% as determined by test method R1,
   • a layer SK1 composed of a self-adhesive composition arranged on one of the surfaces of the film carrier layer F and based on a vinylaromatic block copolymer composition foamed with microballoons,
   • a layer SK2 composed of a self-adhesive composition arranged on the opposite surface of the film carrier layer F from the layer SK1 and based on a vinylaromatic block copolymer composition foamed with microballoons, where the mean diameter of each of the voids formed by the microballoons in the self-adhesive composition layers SK1 and SK2 is independently 20 to 40 $\mu$m, as determined by the diameter test method,
   and where the pressure-sensitive adhesive strip is **characterized in that** the film carrier layer F has a tensile strength in longitudinal direction of greater than 100 N/mm$^2$ and/or a tensile strength in transverse direction of greater than 100 N/mm$^2$, each as determined by test method R1, and that the self-adhesive composition layer SK1 and/or SK2 consists of the following composition:

   | | |
   |---|---|
   | • vinylaromatic block copolymers | 20% to 75% by wt. |
   | • tackifying resins | 24.6% to 60% by wt. |
   | • microballoons | 0.2% to 10% by wt. |
   | • additives | 0.2% to 10% by wt. |

2. Pressure-sensitive adhesive strip according to Claim 1, **characterized by** a symmetric construction in relation to the composition of the layers, in that the foamed vinylaromatic block copolymer compositions of the two self-adhesive composition layers SK1 and SK2 are chemically identical.

3. Pressure-sensitive adhesive strip according to either of Claims 1 and 2, **characterized by** a structurally symmetric construction, in that the two self-adhesive composition layers SK1 and SK2 are of the same thickness and/or have the same density.

4. Pressure-sensitive adhesive strip according to any of the preceding claims,
**characterized in that**
the self-adhesive composition layers SK1 and/or SK2 used are those based on vinylaromatic block copolymers comprising polymer blocks (i) predominantly formed from vinylaromatics (A blocks), preferably styrene, and simultaneously (ii) those predominantly formed by polymerization of 1,3-dienes (B blocks), for example butadiene and isoprene or a copolymer of the two.

5. Pressure-sensitive adhesive strip according to any of the preceding claims,

**characterized in that**

the vinylaromatic block copolymer used is at least one synthetic rubber in the form of a block copolymer having an A-B, A-B-A, $(A-B)_n$, $(A-B)_n X$ or $(A-B-A)_n X$ structure,
in which

- the A blocks are independently a polymer formed by polymerization of at least one vinylaromatic,
- the B blocks are independently a polymer formed by polymerization of conjugated dienes having 4 to 18 carbon atoms, or a partly hydrogenated derivative of such a polymer,
- X is the radical of a coupling reagent or initiator and
- n is an integer $\geq 2$.

6. Pressure-sensitive adhesive strip according to Claim 4 or 5,
   **characterized in that**
   the vinylaromatics for formation of the A block include styrene, $\alpha$-methylstyrene and/or other styrene derivatives, more preferably styrene.

7. Pressure-sensitive adhesive strip according to any of Claims 4 to 6,
   **characterized in that**
   the monomer for the B block is selected from the group consisting of butadiene, isoprene, ethylbutadiene, phenylbutadiene, piperylene, pentadiene, hexadiene, ethylhexadiene and dimethylbutadiene, and any desired mixture of these monomers.

8. Pressure-sensitive adhesive strip according to any of the preceding claims,
   **characterized in that**
   the proportion of the vinylaromatic block copolymers, such as styrene block copolymers in particular, based on the overall self-adhesive composition layer SK1 or SK2, totals at least 30% by wt., further preferably at least 35% by wt., and simultaneously at most 65% by wt., most preferably at most 55% by wt.

9. Pressure-sensitive adhesive strip according to any of the preceding claims,
   **characterized in that**
   the self-adhesive composition layers SK1 and/or SK2 are formed on the basis of vinylaromatic block copolymer and tackifying resin, preferably with selection to an extent of at least 75% by wt. (based on the total resin content) of a resin having a DACP (diacetone alcohol cloud point) of greater than 0°C, preferably greater than 10°C, as determined by the DACP test method, and a softening temperature (ring & ball) of not less than 70°C, preferably not less than 100°C, as determined by the tackifying resin softening temperature test method.

10. Pressure-sensitive adhesive strip according to Claim 9,
    **characterized in that**
    the self-adhesive composition layer SK1 and/or SK2 includes 30% to 50% by wt. of tackifying resin, based on the total weight of the self-adhesive composition layer.

11. Pressure-sensitive adhesive strip according to Claim 9 or 10,
    **characterized in that**
    the tackifying resin to an extent of at least 75% by wt. is hydrocarbon resin or terpene resin or a mixture of the same.

12. Pressure-sensitive adhesive strip according to at least one of the preceding claims,
    **characterized in that**
    the proportion of the microballoons in the self-adhesive composition layer SK1 and/or the self-adhesive composition layer SK2 is between 0.25% by wt. and 5% by wt., more preferably between 0.5% and 4% by wt., even more preferably between 1% and 3.5% by wt., especially between 1.5% and 2.5% by wt., based in each case on the overall composition of the self-adhesive composition layer.

13. Pressure-sensitive adhesive strip according to at least one of the preceding claims,
    **characterized in that**
    the mean diameter of the voids formed by the microballoons in the self-adhesive composition layers SK1 and/or SK2, preferably in both layers SK1 and SK2, is 20 to 25 $\mu$m, as determined by the diameter test method.

**14.** Pressure-sensitive adhesive strip according to at least one of the preceding claims,
**characterized in that**
the self-adhesive composition layer SK1 and/or SK2 consists of the following composition:

| | |
|---|---|
| • vinylaromatic block copolymers | 35% to 65% by wt. |
| • tackifying resins | 34.6% to 45% by wt. |
| • microballoons | 0.2% to 10% by wt. |
| • additives | 0.2% to 10% by wt. |

**15.** Pressure-sensitive adhesive strip according to at least one of the preceding claims,
**characterized in that**
the absolute density of the foamed self-adhesive composition layer SK1 and/or SK2 is 400 to 990 kg/m$^3$, preferably 450 to 970 kg/m$^3$, more preferably 500 to 900 kg/m$^3$, even more preferably 550 to 800 kg/m$^3$ and especially 600 to 750 kg/m$^3$, for example 600 to 700 kg/m$^3$, and/or the relative density is 0.35 to 0.99, preferably 0.45 to 0.97, especially 0.50 to 0.90, as determined by the density test method.

**16.** Pressure-sensitive adhesive strip according to at least one of the preceding claims,
**characterized in that**
the self-adhesive composition layer SK1 and/or SK2 has a thickness between 20 and 200 $\mu$m, preferably of 50 $\mu$m, as determined by the density test method.

**17.** Pressure-sensitive adhesive strip according to any of the preceding claims,
**characterized in that**
one or both surfaces of the film carrier layer F have been physically and/or chemically pretreated.

**18.** Pressure-sensitive adhesive strip according to Claim 17,
**characterized in that**
the pretreatment is an etching operation and/or a corona treatment and/or a primer treatment, preferably an etching operation.

**19.** Pressure-sensitive adhesive strip according to any of the preceding claims,
**characterized in that**
materials used for the film carrier layer F are

(i) polyesters, especially polyethylene terephthalate (PET),
(ii) polyamide (PA),
(iii) polyimide (PI) or
(iv) mono- or biaxially stretched polypropylene (PP).

**20.** Pressure-sensitive adhesive strip according to any of the preceding claims,
**characterized in that**
the film carrier layer F has a thickness between 5 and 125 $\mu$m, preferably between 10 and 60 $\mu$m, more preferably between 10 and 50 $\mu$m, even more preferably between 10 and 40 $\mu$m, even more preferably between 23 and 40 $\mu$m and especially between 30 and 40 $\mu$m, for example of 36 $\mu$m, as determined by the thickness test method.

**21.** Pressure-sensitive adhesive strip according to any of the preceding claims,
**characterized in that**
the film carrier layer F has an elongation at break of less than 200%, more preferably of less than 150%, even more preferably of less than 100% and especially of less than 70%, for example of less than 50%, in each case as determined by test method R1, both in longitudinal direction and in transverse direction.

**22.** Pressure-sensitive adhesive strip according to at least one of the preceding claims,
**characterized in that**
the film carrier layer F has a tensile strength in longitudinal direction of greater than 150 N/mm$^2$, preferably greater than 180 N/mm$^2$, and especially greater than 200 N/mm$^2$, for example greater than 250 N/mm$^2$, and/or a tensile strength in transverse direction of greater than 150 N/mm$^2$, more preferably greater than 180 N/mm$^2$, and especially

greater than 200 N/mm$^2$, for example greater than 250 N/mm$^2$, in each case as determined by test method R1.

23. Pressure-sensitive adhesive strip according to at least one of the preceding claims,
**characterized in that**
the pressure-sensitive adhesive strip has a thickness of 45 $\mu$m to 4000 $\mu$m, preferably of 60 $\mu$m to 1000 $\mu$m, more preferably of 70 $\mu$m to 500 $\mu$m and even more preferably of 80 $\mu$m to 300 $\mu$m, as determined by the thickness test method.

24. Use of a pressure-sensitive adhesive strip according to at least one of the preceding claims for bonding of components such as, in particular, accumulators and electronic devices such as, in particular, mobile phones.

**Revendications**

1. Bande adhésive composée d'au moins trois couches, comprenant

   • une couche située à l'intérieur F composée d'un support de feuille non extensible, la couche F de support de feuille présentant aussi bien dans la direction longitudinale que dans la direction transversale un allongement à la rupture de moins de 300 % comme déterminé selon la méthode de mesure R1,
   • une couche SK1 composée d'une masse autoadhésive qui est agencée sur l'une des surfaces de la couche F de support de feuille et qui est à base d'une masse de copolymères à blocs vinylaromatiques moussée avec des microballons,
   • une couche SK2 composée d'une masse autoadhésive qui est disposée sur la surface située à l'opposé de la couche SK1 de la couche F de support de feuille et qui est à base d'une masse de copolymères à blocs vinylaromatiques moussée avec des microballons,
   le diamètre moyen des cavités formées par les microballons dans les couches de masse autoadhésive SK1 et SK2 étant à chaque fois indépendamment l'un de l'autre de 20 à 40 $\mu$m, comme déterminé selon la méthode de mesure du diamètre,
   et la bande adhésive étant **caractérisée en ce que** la couche F de support de feuille présente une résistance en traction dans la direction longitudinale de plus de 100 N/mm$^2$ et/ou une résistance en traction dans la direction transversale de plus de 100 N/mm$^2$, comme déterminé à chaque fois selon la méthode de mesure R1, et **en ce que** la couche de masse autoadhésive SK1 et/ou SK2 est constituée de la composition suivante :

   • copolymères à blocs vinylaromatiques : 20 à 75 % en poids
   • résines adhésives : 24,6 à 60 % en poids
   • microballons : 0,2 à 10 % en poids
   • additifs : 0,2 à 10 % en poids.

2. Bande adhésive selon la revendication 1, **caractérisée par** une construction symétrique en ce qui concerne la composition des couches, dans laquelle les masses de copolymères à blocs vinylaromatiques moussées des deux couches de masse autoadhésive SK1 et SK2 sont chimiquement identiques.

3. Bande adhésive selon l'une quelconque des revendications 1 et 2, **caractérisée par** une construction structurellement symétrique, dans laquelle les deux couches de masse autoadhésive SK1 et SK2 sont de même épaisseur et/ou présentent la même densité.

4. Bande adhésive selon l'une quelconque des revendications précédentes, **caractérisée en ce qu'**en tant que couches de masse autoadhésive SK1 et/ou SK2, celles à base de copolymères à blocs vinylaromatiques contenant des blocs de polymère (i) majoritairement formés de composés vinylaromatiques (blocs A), préférablement le styrène, et en même temps (ii) ceux majoritairement formés par polymérisation de 1,3-diènes (blocs B), comme par exemple le butadiène et l'isoprène ou un copolymère de ceux-ci, sont utilisées.

5. Bande adhésive selon l'une quelconque des revendications précédentes, **caractérisée en ce qu'**en tant que copolymère à blocs vinylaromatiques, au moins un caoutchouc de synthèse sous forme d'un copolymère à bloc doté d'une construction A-B, A-B-A, (A-B)$_n$, (A-B)$_n$X, ou (A-B-A)$_n$X, est utilisé,
   où

   - les blocs A représentent indépendamment les uns des autres un polymère formé par polymérisation de l'au moins un composé vinylaromatique,
- les blocs B représentent indépendamment les uns des autres un polymère formé par polymérisation de diènes conjugués comportant 4 à 18 atomes de C, ou représentent un dérivé partiellement hydrogéné d'un tel polymère,
- X représente le radical d'un réactif de couplage ou d'un initiateur et
- n représente un nombre entier $\geq 2$.

6. Bande adhésive selon la revendication 4 ou 5, **caractérisée en ce que** les composés vinylaromatiques pour la construction du bloc A comprennent le styrène, l'$\alpha$-méthylstyrène et/ou d'autres dérivés de styrène, particulièrement préférablement le styrène.

7. Bande adhésive selon l'une quelconque des revendications 4 à 6, **caractérisée en ce que** le monomère pour le bloc B est choisi dans le groupe constitué par le butadiène, l'isoprène, l'éthylbutadiène, le phénylbutadiène, le pipérylène, le pentadiène, l'hexadiène, l'éthylhexadiène et le diméthylbutadiène ainsi qu'un quelconque mélange de ces monomères.

8. Bande adhésive selon l'une quelconque des revendications précédentes, **caractérisée en ce que** la proportion des copolymères à blocs vinylaromatiques, comme en particulier des copolymères à blocs de styrène, est au total par rapport à la masse autoadhésive totale SK1 ou SK2 d'au moins 30 % en poids, plus préférablement d'au moins 35 % en poids et en même temps d'au plus 65 % en poids, tout particulièrement préférablement d'au plus 55 % en poids.

9. Bande adhésive selon l'une quelconque des revendications précédentes, **caractérisée en ce que** les couches de masse autoadhésive SK1 et/ou SK2 sont construites à base d'un copolymère à blocs vinylaromatiques et d'une résine adhésive, une résine étant choisie de préférence à raison d'au moins 75 % en poids (par rapport à la proportion totale de résine), laquelle est dotée d'un DACP (diactetone alcohol cloud point - point de trouble de diacétone alcool) de plus de 0 °C, préférablement de plus de 10 °C, comme déterminé selon la méthode de mesure de DACP et d'une température de ramollissement (anneau & bille) supérieure ou égale à 70 °C, de préférence supérieure ou égale à 100 °C, comme déterminé selon la méthode de mesure de température de ramollissement de résine adhésive.

10. Bande adhésive selon la revendication 9, **caractérisée en ce que** 30 à 50 % en poids de résine adhésive, par rapport au poids total de la couche de masse autoadhésive, est contenue dans la couche de masse autoadhésive SK1 et/ou SK2.

11. Bande adhésive selon la revendication 9 ou 10, **caractérisée en ce que** la résine adhésive est composée d'au moins 75 % en poids de résine d'hydrocarbure ou de résine de terpène ou d'un mélange de celles-ci.

12. Bande adhésive selon au moins l'une quelconque des revendications précédentes, **caractérisée en ce que** la proportion de microballons dans la couche de masse autoadhésive SK1 et/ou dans la couche de masse autoadhésive SK2 est comprise entre 0,25 % en poids et 5 % en poids, préférablement entre 0,5 et 4 % en poids, plus préférablement entre 1 et 3,5 % en poids, en particulier entre 1,5 et 2,5 % en poids, à chaque fois par rapport à la composition totale de la couche de masse autoadhésive.

13. Bande adhésive selon au moins l'une quelconque des revendications précédentes, **caractérisée en ce que** le diamètre moyen des cavités formées par les microballons dans les couches de masse autoadhésive SK1 et/ou SK2, de préférence dans les deux couches SK1 et SK2, est de 20 à 25 $\mu$m, comme déterminé selon la méthode de mesure du diamètre.

14. Bande adhésive selon au moins l'une quelconque des revendications précédentes, **caractérisée en ce que** la couche de masse autoadhésive SK1 et/ou SK2 est constituée de la composition suivante :

   • copolymères à blocs vinylaromatiques : 35 à 65 % en poids
   • résines adhésives : 34,6 à 45 % en poids
   • microballons : 0,2 à 10 % en poids
   • additifs : 0,2 à 10 % en poids.

15. Bande adhésive selon au moins l'une quelconque des revendications précédentes, **caractérisée en ce que** la densité absolue de la couche de masse autoadhésive SK1 et/ou SK2 moussée est de 400 à 990 kg/m$^3$, de préférence de 450 à 970 kg/m$^3$, préférablement de 500 à 900 kg/m$^3$, plus préférablement de 550 à 800 kg/m$^3$ et en particulier de 600 à 750 kg/m$^3$, comme par exemple de 600 à 700 kg/m$^3$, et/ou la densité relative est de 0,35 à 0,99, préférablement de 0,45 à 0,97, en particulier de 0,50 à 0,90, comme déterminée selon la méthode de mesure de la densité.

16. Bande adhésive selon au moins l'une quelconque des revendications précédentes, **caractérisée en ce que** la couche de masse autoadhésive SK1 et/ou SK2 présente une épaisseur comprise entre 20 et 200 $\mu$m, de préférence de 50 $\mu$m, comme déterminée selon la méthode de mesure de la densité.

17. Bande adhésive selon l'une quelconque des revendications précédentes, **caractérisée en ce qu'**une ou les deux surfaces de la couche F de support de feuille est/sont prétraitée(s) physiquement et/ou chimiquement.

18. Bande adhésive selon la revendication 17, **caractérisée en ce que** le prétraitement est une gravure et/ou un traitement par corona et/ou un dépôt d'un apprêt, de préférence une gravure.

19. Bande adhésive selon l'une quelconque des revendications précédentes, **caractérisée en ce qu'**en tant que matériau pour la couche F de support de feuille

   (i) un polyester, en particulier un poly(téréphtalate d'éthylène) (PET),
   (ii) un polyamide (PA),
   (iii) un polyimide (PI) ou
   (iv) un polypropylène (PP) étiré de manière monoaxiale ou biaxiale est utilisé.

20. Bande adhésive selon l'une quelconque des revendications précédentes, **caractérisée en ce que** la couche F de support de feuille présente une épaisseur comprise entre 5 et 125 $\mu$m, de préférence entre 10 et 60 $\mu$m, préférablement entre 10 et 50 $\mu$m, plus préférablement entre 10 et 40 $\mu$m, plus préférablement entre 23 et 40 $\mu$m et en particulier entre 30 et 40 $\mu$m, comme par exemple de 36 $\mu$m, comme déterminée selon la méthode de mesure de l'épaisseur.

21. Bande adhésive selon l'une quelconque des revendications précédentes, **caractérisée en ce que** la couche F de support de feuille présente un allongement à la rupture de moins de 200 %, préférablement de moins de 150 %, plus préférablement de moins de 100 %, et en particulier de moins de 70 %, comme par exemple de moins de 50 %, comme déterminé à chaque fois selon la méthode de mesure R1, aussi bien dans la direction longitudinale que dans la direction transversale.

22. Bande adhésive selon au moins l'une quelconque des revendications précédentes, **caractérisée en ce que** la couche F de support de feuille présente une résistance en traction dans la direction longitudinale supérieure à 150 N/mm$^2$, préférablement supérieure à 180 N/mm$^2$, et en particulier supérieure à 200 N/mm$^2$, comme par exemple supérieure à 250 N/mm$^2$, et/ou une résistance en traction dans la direction transversale supérieure à 150 N/mm$^2$, préférablement supérieure à 180 N/mm$^2$, et en particulier supérieure à 200 N/mm$^2$, comme par exemple supérieure à 250 N/mm$^2$, comme déterminée à chaque fois selon la méthode de mesure R1.

23. Bande adhésive selon au moins l'une quelconque des revendications précédentes, **caractérisée en ce que** la bande adhésive présente une épaisseur de 45 $\mu$m à 4 000 $\mu$m, de préférence de 60 $\mu$m à 1 000 $\mu$m, préférablement de 70 $\mu$m à 500 $\mu$m et plus préférablement de 80 $\mu$m à 300 $\mu$m, comme déterminé selon la méthode de mesure de l'épaisseur.

24. Utilisation d'une bande adhésive selon au moins l'une quelconque des revendications précédentes pour le collage de composants comme en particulier des batteries et d'appareils électroniques comme en particulier des téléphones portables.

Fig. 1

Fig. 2

## Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2832780 A1
- JP 2010070655 A
- DE 102008056980 A1
- WO 2009090119 A1
- WO 2003011954 A1
- DE 102015206076 A1
- DE 102016202479
- DE 102016209707
- EP 3075772 A1

**In der Beschreibung aufgeführte Nicht-Patentliteratur**

- Taschenbuch der Physik. Verlag Harri Deutsch, 1994, 102-110
- *CHEMICAL ABSTRACTS,* 1330-20-7
- *CHEMICAL ABSTRACTS,* 123-42-2